(19) Europäisches Patentamt
European Patent Office
Office européen des brevets

(11) **EP 4 503 769 A1**

(12) **EUROPEAN PATENT APPLICATION**
published in accordance with Art. 153(4) EPC

(43) Date of publication:
**05.02.2025 Bulletin 2025/06**

(21) Application number: **22934256.3**

(22) Date of filing: **31.03.2022**

(51) International Patent Classification (IPC):
***H04W 52/40*** (2009.01)  ***H04W 52/54*** (2009.01)
***H04W 52/14*** (2009.01)  ***H04W 52/36*** (2009.01)
***H04W 52/08*** (2009.01)  ***H04W 52/10*** (2009.01)
***H04B 7/06*** (2006.01)

(52) Cooperative Patent Classification (CPC):
**H04B 7/06; H04W 52/08; H04W 52/10;
H04W 52/14; H04W 52/36; H04W 52/40;
H04W 52/54**

(86) International application number:
**PCT/CN2022/084611**

(87) International publication number:
**WO 2023/184419 (05.10.2023 Gazette 2023/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.
Beijing 100085 (CN)**

(72) Inventor: **LUO, Xingyi
Beijing 100085 (CN)**

(74) Representative: **Dehns Germany Partnerschaft
mbB
Theresienstraße 6-8
80333 München (DE)**

(54) **POWER CONTROL METHOD AND APPARATUS, DEVICE, AND STORAGE MEDIUM**

(57)    The present application relates to the field of mobile communications, and discloses a power control method and apparatus, a device, and a storage medium. The method comprises: a terminal receives indication information sent by a network device, the indication information being used for indicating a power control parameter of an uplink transmission corresponding to each transmission and reception point (TRP) among a plurality of TRPs. The present application provides a method for indicating a power control parameter when a plurality of TRPs are configured for a terminal, and power control can be performed on an uplink transmission of each TRP among the plurality of TRPs. The powers of the TRPs are respectively controlled, so that the interference between the TRPs is reduced, and the channel capacity of the system is also ensured.

Step 301, the network device sends indication information to the terminal, wherein the indication information indicates a power control parameter of an uplink transmission corresponding to each TRP among a plurality of TRPs

Step 302, the terminal receives the indication information sent by the network device, wherein the indication information indicates a power control parameter of an uplink transmission corresponding to each TRP among a plurality of TRPs

FIG. 3

Description

TECHNICAL FIELD

The present disclosure relates to the field of mobile communications, and in particular to a power control method, apparatus, device, and storage medium.

BACKGROUND

In a mobile communication system, communication is performed between a network device and a terminal via an uplink transmission and a downlink channel, and when the terminal sends information to the network device via the uplink transmission, the power of the uplink transmission needs to be controlled. However, a solution that a network device configures a plurality of Transmission and Reception Points (TRPs) for a terminal and communicates with the terminal via the plurality of TRPs is proposed at present; however, how to determine the uplink transmission power of each TRP becomes an urgent problem to be solved.

SUMMARY

Embodiments of the present disclosure provide a power control method, apparatus, device, and storage medium, which reduces interference among the TRPs and also ensure channel capacity of a system. The technical solution is as follows.

According to an aspect of the present disclosure, a power control method is provided. The method is performed by a terminal and includes:
receiving indication information sent by a network device, wherein the indication information indicates a power control parameter of an uplink transmission corresponding to each TRP among a plurality of transmission and reception points (TRPs).

According to an aspect of the present disclosure, a power control method is provided. The method is performed by a network device and includes:
sending indication information to a terminal, wherein the indication information indicates a power control parameter of an uplink transmission corresponding to each TRP among a plurality of transmission and reception points (TRPs).

According to an aspect of the present disclosure, a power control apparatus is provided, and the apparatus includes:
a receiving module, configured to receive indication information sent by a network device, wherein the indication information indicates a power control parameter of an uplink transmission corresponding to each TRP among a plurality of transmission and reception points (TRPs).

According to an aspect of the present disclosure, a power control apparatus is provided, and the apparatus includes:
a sending module, configured to send indication information to a terminal, wherein the indication information indicates a power control parameter of an uplink transmission corresponding to each TRP among a plurality of transmission and reception points (TRPs).

According to an aspect of the present disclosure, a terminal is provided, including: a processor; a transceiver coupled to the processor; and a memory for storing executable instructions of the processor; wherein the processor is configured to load and execute executable instructions to implement the power control method according to the above aspect.

According to an aspect of the present disclosure, a network device is provided, including: a processor; a transceiver coupled to the processor; and a memory for storing executable instructions of the processor; wherein the processor is configured to load and execute executable instructions to implement the power control method according to the above aspect.

According to an aspect of the present disclosure, a computer-readable storage medium is provided, wherein the computer-readable storage medium has stored therein executable program codes to be loaded and executed by a processor to implement the power control method of the above aspect.

According to an aspect of the present disclosure, a chip is provided, including programmable logic circuitry and/or program instructions for implementing the power control method of the above aspect when the chip is run on a terminal or network device.

According to an aspect of the present disclosure, a computer program product is provided, and the computer program product is configured for implementing the power control method of the above-mentioned aspect when the computer program product is executed by a processor of a terminal or network device.

In the power control scheme provided by the embodiments of the present disclosure, a method for indicating a power control parameter is provided when a plurality of TRPs are configured for a terminal, and power control can be performed on an uplink transmission of each TRP among the plurality of TRPs. The power of each TRP is separately controlled, so that the interference between the TRPs is reduced, and the channel capacity of the system is also ensured.

## BRIEF DESCRIPTION OF THE DRAWINGS

To more clearly illustrate the technical solutions in the embodiment of the present disclosure, a brief description will be given below which need to be used in the description of the embodiments; obviously, the drawings in the description below are only some embodiments of the present disclosure, and it would have been obvious for a person skilled in the art to obtain other drawings according to these drawings without involving any creative effort.

FIG. 1 shows a block diagram of a communication system according to an exemplary embodiment of the present disclosure;
FIG. 2 shows a block diagram of a communication system according to an exemplary embodiment of the present disclosure;
FIG. 3 shows a flow chart of a power control method according to an exemplary embodiment of the present disclosure;
FIG. 4 shows a schematic diagram of a MAC-CE format according to an exemplary embodiment of the present disclosure;
FIG. 5 shows a schematic diagram of another MAC-CE format according to an exemplary embodiment of the present disclosure;
FIG. 6 shows a schematic diagram of a TCI state configuration according to an exemplary embodiment of the present disclosure;
FIG. 7 shows a schematic diagram of yet another MAC-CE format according to an exemplary embodiment of the present disclosure;
FIG. 8 shows a flow chart of a power control method according to an exemplary embodiment of the present disclosure;
FIG. 9 shows a flow chart of a power control method according to an exemplary embodiment of the present disclosure;
FIG. 10 shows a block diagram of a power control apparatus according to an exemplary embodiment of the present disclosure;
FIG. 11 shows a block diagram of another power control apparatus according to an exemplary embodiment of the present disclosure; and
FIG. 12 shows a schematic block diagram of a communication device according to an exemplary embodiment of the present disclosure.

## DETAILED DESCRIPTION

In order that the objects, aspects and advantages of the present disclosure will become more apparent, embodiments of the present disclosure will be described in detail referring to the accompanying drawings.

Reference will now be made in detail to exemplary embodiments, examples of which are illustrated in the accompanying drawings. Where the following description refers to the accompanying drawings, like numbers in different drawings indicate the same or similar elements, unless otherwise indicated. The embodiments described in the following exemplary embodiments do not represent all embodiments consistent with the present disclosure. Rather, they are merely examples of apparatuses and methods consistent with certain aspects of the present disclosure as detailed in the appended claims.

The terminology used herein is used for the purpose of describing particular embodiments only and is not intended to be limiting of the present disclosure. As used in the present disclosure and the appended claims, the singular forms "a", "an", and "the" are intended to include the plural forms as well, unless the context clearly indicates otherwise. It should also be understood that the term "and/or" as used herein refers to and encompasses any and all possible combinations of one or more of the associated listed items.

It should be understood that, although the terms first, second, third, etc. may be used herein to describe various information, such information should not be limited to these terms. These terms are only used to distinguish one type of information from another. For example, the first information may also be referred to as the second information, and similarly, the second information may also be referred to as the first information, without departing from the scope of the present disclosure. Depending on the context, for example, the word "if' as used herein may be interpreted as "when......" or "while......" or "in response to determining......".

It should be noted that the information (including but not limited to user equipment information, user personal information, etc.), data (including but not limited to data for analysis, stored data, displayed data, etc.) and signals involved in the present disclosure are authorized by the user or fully authorized by all parties, and the collection, use and processing of relevant data shall comply with relevant laws, regulations and standards of relevant countries and regions.

The application scenario of the present disclosure is described hereinafter:

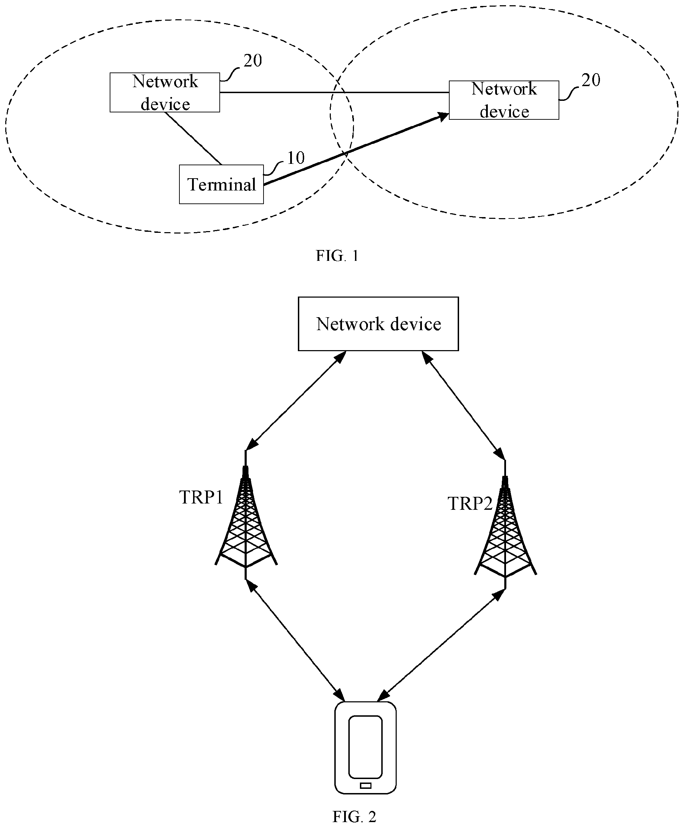

FIG. 1 shows a block diagram of a communication system according to an exemplary embodiment of the present disclosure, and the communication system may include a terminal 10 and a network device 20.

The number of the terminals 10 is typically multiple, and one or more terminals 10 may be distributed within a cell managed by each network device 20. The terminal 10 may include various handheld devices having wireless communication capabilities, on-board devices, wearable devices, computing devices or other processing devices connected to a wireless modem, as well as various forms of User Equipment (UE), Mobile Station (MS), etc. For convenience of description, in the embodiments of the present disclosure, the above-mentioned devices are collectively referred to as terminals.

The network device 20 is an apparatus deployed in an access network to provide wireless communication function for the terminal 10. For convenience of description, in the embodiments of the present disclosure, the apparatuses for providing the wireless communication function for the terminal 10 described above are collectively referred to as network devices. A connection may be established between the network device 20 and the terminal 10 over an air interface to communicate over the connection, including interaction of signaling and data. There may be a plurality of network devices 20, and two adjacent network devices 20 may communicate with each other in a wired or wireless manner. The terminal 10 may switch between, i.e., establish a connection with, different network devices 20.

The network device 20 may include various forms of macro base stations, micro base stations, relay stations, access points, etc. In systems with different radio access technologies, the name of the device with network device functionality may differ, e.g., in 5G NR systems called gNodeB or gNB. As communication technologies evolve, the name "network device" may vary.

In some embodiments, a network device may contain one or more Transmission Reception Points (TRPs).

For example, as shown in FIG. 2, one network device configures two TRPs, i.e., TRP1 and TRP2, and the network device establishes a communication connection with a terminal via the two TRPs, and then the network device can communicate with the terminal via the two TRPs.

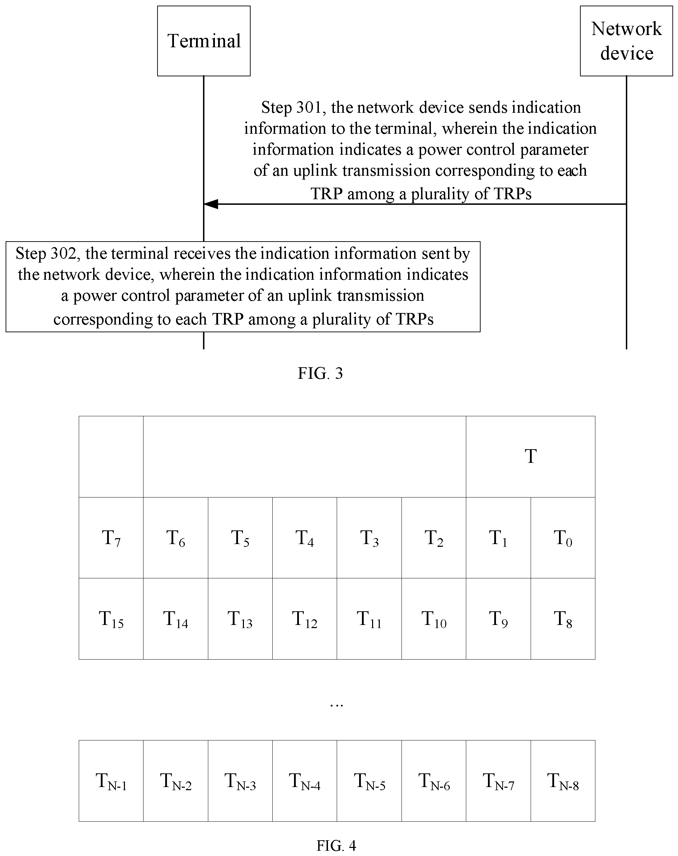

FIG. 3 shows a flow chart of a power control method according to an exemplary embodiment of the present disclosure, which, for example, can be applied to the terminal and the network device as shown in FIG. 1. The method includes at least some of following content.

In step 301, the network device sends indication information to the terminal, wherein the indication information indicates a power control parameter of an uplink transmission corresponding to each TRP among a plurality of TRPs.

In the embodiment of the present disclosure, communication can be performed between the network device and the terminal, and for the terminal, the terminal sending information to the network device refers to uplink transmission of the terminal. However, for the terminal, the terminal can perform uplink transmission via a plurality of TRPs configured by the network device, and for each TRP, each TRP has a corresponding uplink transmission power. That is to say, when the terminal performs uplink transmission through different TRPs, it will use different power to transmit information.

When the terminal performs uplink transmission, the uplink transmission is performed according to the power of the uplink transmission corresponding to each TRP, and the network device needs to send indication information to the terminal, for indicating to the terminal a power control parameter of the uplink transmission corresponding to each TRP in a plurality of TRPs via the indication information.

In some embodiments, the power control parameter for uplink transmission refers to a power control parameter for an uplink channel, or refers to a power control parameter for an uplink signal, which is not limited in the embodiments of the present disclosure. Stated another way, the power control parameter for the uplink transmission in the embodiment of the present disclosure may be replaced with the power control parameter for the uplink channel. Or, the power control parameter for the uplink transmission in the embodiment of the present disclosure may be replaced with the power control parameter for the uplink signal.

Alternatively, the uplink transmission includes at least one of Sound Resource Signal (SRS), Physical Uplink Shared Channel (PUSCH), and Physical Uplink Control Channel (PUCCH).

In step 302, the terminal receives the indication information sent by the network device, wherein the indication information indicates the power control parameter of the uplink transmission corresponding to each TRP among the plurality of TRPs.

In the embodiment of the present disclosure, upon receiving the indication information sent by the network device, the terminal can determine the power control parameter for uplink transmission corresponding to each TRP according to the indication information, and then perform uplink transmission with the corresponding TRP based on the power corresponding to the determined power control parameter for the uplink transmission.

It should be noted that the steps executed by the network device may form an embodiment alone, and the steps executed by the terminal may also form an embodiment alone, which is not limited by the present disclosure.

According to the scheme provided by the present disclosure, a method for indicating a power control parameter when a plurality of TRPs are configured for the terminal is provided, and power control can be performed on the uplink transmission of each TRP among the plurality of TRPs. The power of each TRP is separately controlled, so that the interference between the TRPs is reduced, and the channel capacity of the system is also ensured.

On the basis of the embodiment shown in FIG. 3, the power control parameter for uplink transmission corresponding to each TRP indicated by the indication information includes an open loop power parameter and a closed loop power parameter.

The open loop power parameter is used for compensating signal loss caused by path loss and shadow fading, and the closed loop power parameter refers to a power adjustment value indicated by the network device for a second uplink transmission indication of the terminal according to an uplink power measured on a first uplink transmission.

The trigger moment of the first uplink transmission is located before the trigger moment of the second uplink transmission, that is to say, the first uplink transmission is an uplink transmission previously performed by the terminal, and the second uplink transmission is an uplink transmission performed currently or later by the terminal. In addition, the closed loop power parameter can also be understood as a power adjustment value indicated by the network device for the current uplink transmission according to the measured uplink power of the previous uplink transmission.

In the embodiment of the present disclosure, the indication information indicates the open loop power parameter and the closed loop power parameter, and then the terminal may determine the indicated open loop power parameter and closed loop power parameter according to the indication information, and further determine the power of the uplink transmission based on the open loop power parameter and the closed loop power parameter.

In some embodiments, the open loop power parameters include an open loop receiving end power target value, a partial path loss compensation factor, a closed loop index, and a path loss reference signal. According to the open loop power parameter and the closed loop power parameter, the following formula can be used to determine the power of uplink transmission:

$$P = \min\left[P_{CMAX}, \{A\} + \{B\} + \{C\}\right]$$

where, $P_{CMAX}$ is the maximum allowed uplink transmission power, A denotes an open loop portion, and the open loop portion is obtained by calculation from open loop power parameters $P_0$, *alpha*, and PL, P0 is the open loop receiving end power target value, alpha is the partial path loss compensation factor, and PL is a downlink path loss estimation value; B refers to a closed loop portion, and the closed loop portion is determined by a closed loop power parameter, i.e., a power control adjustment state value, and is used for dynamically adjusting the power of any uplink transmission of the terminal; C refers to other adjustments associated with information such as resource allocation, link adaptation, etc. The open loop portion and the closed loop portion need to be indicated by the indication information.

In some embodiments, the open loop power parameter is indicated by a Transmission Configuration Indication (TCI) state, and there are different relationships between TCI states and open loop power parameters.

Alternatively, the TCI state may be represented by a TCI state, which is not limited in the embodiments of the present disclosure. In addition, the TCI state in the embodiment of the present disclosure may be a joint TCI state, or an uplink TCI state.

In some embodiments, the open loop power parameter and the TCI state are in a one-to-one correspondence.

In the embodiment of the present disclosure, the open loop power parameter and the TCI state are in a one-to-one correspondence, that is to say, one TCI state corresponds to one open loop power parameter.

Alternatively, the network device configures the terminal with a correspondence between the open loop power parameter and the TCI state.

For example, the network device configures a correspondence between the open loop power parameter and the TCI state for the terminal by configuring a TCI state list.

It should be noted that for different TCI states, different TCI states correspond to different open loop power parameters, or different TCI states correspond to the same open loop power parameter.

On the basis of the above-mentioned embodiments, the indication information may use a plurality of TCI domains or one TCI domain to indicate open loop power parameters corresponding to different TRPs, and these two cases are described below.

First case: the indication information indicates a plurality of TCI domains, each TCI domain indicating one TCI state.

In an embodiment of the present disclosure, the network device may indicate the power control parameter of the uplink transmission corresponding to each TRP in a plurality of TRPs via the indication information, and the power control parameter of the uplink transmission includes the open loop power parameter, then the network device may set a plurality of TCI domains in the indication information, each TCI domain indicating one TCI state, and each TCI state being associated with one open loop power parameter.

In some embodiments, the indication information is Downlink Control Information (DCI 1_1) or DCI 1_2.

In some embodiments, each TCI state is associated with the open loop power parameter of one TRP, and the TCI state indicated by the TCI domain is corresponding to one TCI state among a plurality of activated TCI states.

In the embodiment of the present disclosure, the TCI state and the open loop power parameter are in a one-to-one correspondence, that is to say, the TCI state is corresponding to one open loop power parameter, and the open loop power parameter associated with each TCI state is corresponding to the open loop power parameter of one TRP, and the open loop power parameter corresponding to each TRP can be indicated via the TCI domain. In addition, each TCI state indicated by the plurality of indication domains in the indication information is corresponding to one TCI state in a plurality of activated TCI states.

Alternatively, for each TCI domain, each code point of the TCI domain is corresponding to one TCI state. Each TCI domain includes at least one bit, the at least one bit can indicate a plurality of code points, and different code points indicate different TCI states. Furthermore, the code points may also be understood as values indicated by at least one bit, that is to say, at least one bit may indicate a plurality of values, and different values are corresponding to different TCI states.

For example, if one TCI domain includes 3 bits, then 8 values may be indicated by the TCI domain, that is to say, the network device may indicate one of 8 TCI states through the TCI domain.

In some embodiments, the network device informs the terminal of the activated TCI state through MAC-CE (MAC Control Element, MAC layer control unit).

The network device sends a plurality of first MAC-CEs to the terminal, and the terminal receives the plurality of first MAC-CEs, where each first MAC-CE is used for activating a plurality of TCI states corresponding to one TCI domain.

In the embodiment of the present disclosure, the network device activates a plurality of TCI states corresponding to one TCI domain in advance via the first MAC-CE, and further indicates one TCI state corresponding to the TCI domain via the indication information. In addition, for the network device, the network device sends a plurality of first MAC-CEs to the terminal, and one first MAC-CE activates a plurality of TCI states corresponding to one TCI domain, that is to say, one first MAC-CE is used for activating a plurality of TCI states corresponding to one TCI domain corresponding to one TRP, and the plurality of TCI states corresponding to the plurality of TCI domains are activated by sending the plurality of first MAC-CEs.

For example, the first MAC-CE includes state information corresponding to each TCI state, where the state information being 1 indicates that the corresponding TCI state is active, and the state information being 0 indicates that the corresponding TCI state is inactive. An identifier for distinguishing a TCI domain is further included, the identifier indicating to which TCI domain the plurality of TCI states activated by the first MAC CE correspond. For example, if the identifier is 0, it is indicated that it corresponds to a first TCI domain, and if the identifier is 1, it is indicated that it corresponds to a second TCI domain.

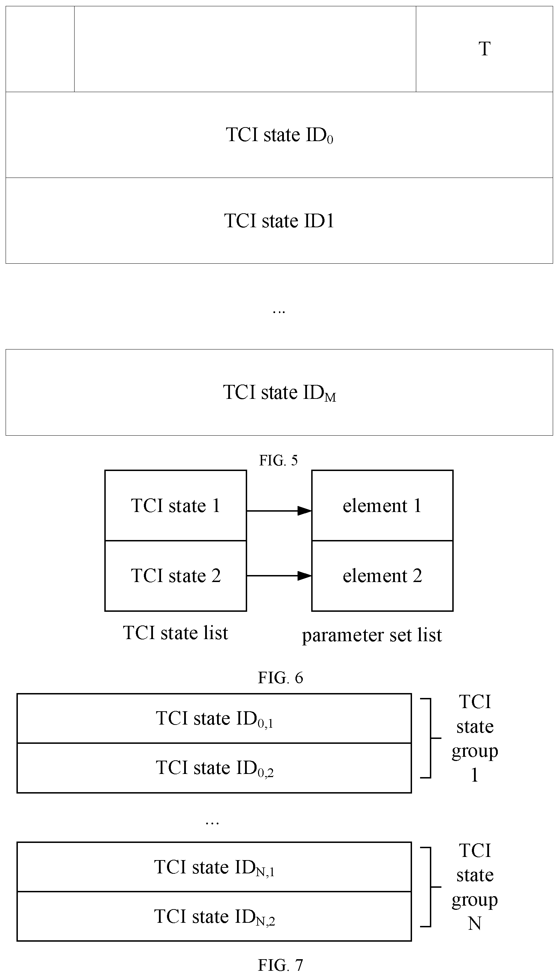

For example, FIGS. 4 and 5 respectively show a format of a first MAC-CE, and the first MAC-CE of both formats can activate a plurality of TCI states corresponding to one TCI domain. As shown in FIG. 4, T is an identifier, and one first MAC-CE includes state information about N TCI states, and the state information corresponding to each TCI state indicates whether the TCI state is activated. Here, each row in FIG. 4 includes state information about 8 TCI states, and N/8 rows are used to configure whether N TCI states are activated. Or, as shown in FIG. 5, one first MAC-CE includes M TCI states, and one row corresponds to one TCI state, and the M TCI states are all activated TCI states.

It should be noted that in the embodiment of the present disclosure, the number of TCI states corresponding to each TCI domain activated by the network device is associated with the number of bits of the TCI domain. For example, if each TCI domain includes 3 bits indicating at most 8 TCI states, the network device activates at most 8 TCI states for each TCI domain, and if each TCI domain includes 2 bits indicating at most 4 TCI states, the network device activates at most 4 TCI states for each TCI domain. Or, it can also be understood that the network device activates a number of TCI states that is less than or equal to the number of code points included in the TCI domain.

In some embodiments, before the network device activates the TCI state via the first MAC-CE, it is required to configure a plurality of TCI states for the terminal, so that the network device activates some of the TCI states in the plurality of TCI states via the first MAC-CE.

Alternatively, the network device sends a first configuration signaling to the terminal, and the terminal receives the first configuration signaling, where the first configuration signaling is used for configuring a TCI state list which includes a plurality of TCI states, and each TCI state is in a one-to-one correspondence with the open loop power parameter.

In the embodiment of the present disclosure, the network device configures the TCI state list containing a plurality of TCI states for the terminal through the first configuration signaling, and informs the terminal of each TCI state through the TCI state list.

In some embodiments, the first configuration signaling is an RRC signaling, or other higher layer signaling, which is not limited in the embodiments of the present disclosure.

Alternatively, one TCI state in the TCI state list configured by the first configuration information is corresponding to one open loop power parameter.

For example, as shown in FIG. 6, a plurality of TCI states are included in the TCI state list, and each TCI state corresponds to one element, i.e., to one open loop power parameter, for example, TCI state 1 corresponds to element 1 which corresponds to open loop power parameter 1, and TCI state 2 corresponds to element 2, i.e., to open loop power parameter 2.

It should be noted that the embodiments of the present disclosure are only described with the example that the indication information indicates a plurality of TCI states via a plurality of TCI domains. In another embodiment, the indication information indicates a plurality of TCI states, each TCI state being corresponding to one TRP.

In the embodiment of the present disclosure, the indication information is actually that for one TRP, one TCI state is activated, and it is sufficient to directly determine the TCI state as the TCI state corresponding to the TRP, without the need for further indication.

In some embodiments, the indication information includes a plurality of second MAC-CEs, and each second MAC-CE is used for activating one TCI state.

In the embodiment of the present disclosure, the indication information includes a plurality of second MAC-CEs, that is to say, each second MAC-CE in the plurality of second MAC-CEs can directly activate one TCI state, and then directly take the activated TCI state as the TCI state corresponding to one TRP, and each TCI state among the plurality of TCI states activated by the plurality of second MAC-CEs is corresponding to one TRP. The open loop power parameter associated with each activated TCI state is used for determining the power of the uplink transmission of the corresponding TRP.

Alternatively, the network device sends a first configuration signaling to the terminal, and the terminal receives the first configuration signaling, where the first configuration signaling is used for configuring a TCI state list which includes a plurality of TCI states, and each TCI state is in a one-to-one correspondence with the open loop power parameter.

The first configuration signaling is similar to the first configuration signaling in the above-described embodiment, and will not be elaborated here.

Second case: the indication information indicates one TCI domain, the TCI domain indicates a TCI state group, and the TCI state group includes a plurality of TCI states.

In an embodiment of the present disclosure, the network device may indicate a power control parameter of an uplink transmission corresponding to each TRP in a plurality of TRPs via the indication information, and the power control parameter of the uplink transmission includes an open loop power parameter; then the network device may indicate one TCI state group via the indication information, where the TCI state group includes a plurality of TCI states, and one TCI domain indicates one TCI state group, and each TCI state among the plurality of TCI states included in the TCI state group is associated with one open loop power parameter.

The number of TCI states included in one TCI state group is the same as the number of TRPs.

In some embodiments, the indication information is DCI 1_1 or DCI 1_2.

In some embodiments, each TCI state in the plurality of TCI states is associated with the open loop power parameter of one TRP, and the TCI state group indicated by the TCI domain is corresponding to one TCI state group in the plurality of activated TCI state groups.

In the embodiment of the present disclosure, the TCI state and the open loop power parameter are in a one-to-one correspondence, that is to say, the TCI state is associated with one open loop power parameter, the open loop power parameter indicated by each TCI state is corresponding to the open loop power parameter of one TRP, and the open loop power parameter corresponding to each TRP can be indicated via the indication information. In addition, the TCI state group indicated by the TCI domain in the indication information is corresponding to one TCI state group in the plurality of activated TCI state groups.

Alternatively, for the TCI domain in the indication information, the TCI domain uses code points to indicate the TCI state group. The TCI domain includes at least one bit, at least one bit can indicate a plurality of code points, and different code points indicate different TCI state groups. Furthermore, the code points may also be understood as values indicated by at least one bit, that is to say, at least one bit may indicate a plurality of values, and different values are corresponding to different sets of TCI states.

For example, if one TCI domain includes 3 bits, then 8 values may be indicated by the TCI domain, that is to say, the network device may indicate one TCI state group of the 8 TCI state groups through the TCI domain.

In some embodiments, the network device informs the terminal of the active TCI state group through the MAC-CE.

The network device sends a third MAC-CE to the terminal, and the terminal receives the third MAC-CE, wherein the third MAC-CE is used for activating a plurality of TCI state groups corresponding to a corresponding TCI domain.

In the embodiment of the present disclosure, the network device activates a plurality of TCI state groups corresponding to one TCI domain in advance via the third MAC-CE, and then indicates one TCI state group indicated by the TCI domain via the indication information.

For example, the description is made with the example that 2 TCI states are included in each TCI state group. As shown in FIG. 7, the third MAC-CE includes 2N TCI states, and every two TCI states are in a TCI state group, where the TCI state $ID_{0,1}$ (Identity document) and the TCI state $ID_{0,2}$ are in the TCI state group 0, the TCI state $ID_{1,1}$ and the TCI state $ID_{1,2}$ are in the TCI state group 1, and so on, the TCI state $ID_{N,1}$ and the TCI state $ID_{N,2}$ are in the TCI state group N.

It should be noted that in the embodiment of the present disclosure, the number of TCI state groups corresponding to the TCI domain activated by the network device is associated with the number of bits of the TCI domain. For example, if the TCI domain including 3 bits indicates at most 8 TCI state groups, the network device activates at most 8 TCI state groups for the TCI domain, and if the TCI domain including 2 bits indicates at most 4 TCI state groups, the network device activates at most 4 TCI state groups for the TCI domain. Or, it can also be understood that the network device activates a number of TCI states that is less than or equal to the number of code points included in the TCI domain.

In some embodiments, before the network device activates the TCI state group via the third MAC-CE, it is required to configure a plurality of TCI states for the terminal, so that the network device activates some of the TCI states in the plurality of TCI states via the third MAC-CE.

Alternatively, the network device sends a second configuration signaling to the terminal, and the terminal receives the second configuration signaling, where the second configuration signaling is used for configuring a TCI state list, and the TCI state list includes a plurality of TCI states.

In the embodiment of the present disclosure, the network device configures a TCI state list containing a plurality of TCI states for the terminal via the second configuration signaling, and configures the plurality of TCI states for the terminal via the TCI state list, and then the network device can activate some TCI states in the plurality of configured TCI states via the third MAC-CE, and these TCI states belong to the same or different TCI state groups.

It should be noted that the embodiment of the present disclosure is only described as an example in which the indication information indicates one TCI state group including a plurality of TCI states through one TCI domain. In another embodiment, the indication directly indicates one TCI state group, and the TCI state group includes a plurality of TCI states.

In the embodiment of the present disclosure, the indication information sent by the network device actually activates one TCI state group, where each TCI state in a plurality of TCI states included in the TCI state group is corresponding to one TRP, and the TCI state included in the TCI state group is directly determined to be the TCI state corresponding to the TRP, without the need for further indication.

In some embodiments, the indication information is a fourth MAC-CE, and the fourth MAC-CE is used to activate one TCI state group.

In the embodiment of the present disclosure, the indication information is a fourth MAC-CE, that is to say, a TCI state group is directly activated via the fourth MAC-CE, and then the TCI state included in the activated TCI state group is directly taken as the TCI state corresponding to the TRP.

Alternatively, the network device sends a second configuration signaling to the terminal, and the terminal receives the second configuration signaling, where the second configuration signaling is used for configuring a TCI state list which includes a plurality of TCI states, and each TCI state is corresponding to the open loop power parameter in a one-to-one correspondence.

The second configuration signaling is similar to the first configuration signaling in the above-described embodiment, and will not be elaborated here.

It is noted that on the basis of the above-mentioned embodiments, the open loop power parameter includes at least one of:

(1) an open loop receiving end power target value;
(2) a partial path loss compensation factor;
(3) a closed loop index; and
(4) a path loss reference signal.

In the solution provided by embodiments of the present disclosure, by indicating a plurality of TCI states to indicate the open loop power parameters for uplink transmission with different TRPs to the terminal, power control can be applied to the uplink transmission of each TRP among the plurality of TRPs. The power of each TRP is separately controlled, so that the interference between the TRPs is reduced, and the channel capacity of the system is also ensured.

On the basis of the above-mentioned embodiments, the above-mentioned embodiments are described with the example that the network device completes the configuration of the open loop power parameter by configuring the TCI state. In another embodiment, the TCI state is not in a one-to-one correspondence with the open loop power control parameter, and the network device can configure the open loop power parameter for each TRP directly by means of a parameter set. That is to say, the indication information sent by the network device indicates the open loop power parameter corresponding to each TRP by means of indicating the parameter set.

In some embodiments, the indication information indicates a plurality of parameter sets, and each parameter set is used for indicating the open loop power parameter corresponding to one TRP.

In the embodiment of the present disclosure, the network device sends indication information to the terminal, where the indication information indicates a plurality of parameter sets, and each parameter set indicates the open loop power parameter corresponding to one TRP. Therefore, after receiving the indication information sent by the network device, the terminal can determine the plurality of parameter sets according to the indication information, and then determine the open loop power parameter of the TRP corresponding to each parameter set from the plurality of parameter sets.

Alternatively, the indication information is carried in Radio Resource Control (RRC) or MAC-CE.

In some embodiments, the terminal may determine the TRP corresponding to each parameter set in a predefined manner, that is to say, determine the TRP corresponding to each parameter set in an implicitly indicated manner. Alternatively, the indication information also carries the identification of the TRP corresponding to each parameter set, i.e., indicating the TRP corresponding to each parameter set by means of explicit indication.

For example, the indication information indicates a plurality of parameter sets, and the terminal may determine a corresponding TRP according to the position of each parameter set. For example, the first parameter set is the open loop power parameter for uplink transmission corresponding to the first TCI state, and the second parameter set is the open loop power parameter for uplink transmission corresponding to the second TCI state.

As another example, when the indication information is sent through the RRC or the MAC-CE, the indication information includes an identifier corresponding to the parameter set, and the TRP corresponding to the parameter set is indicated by the identifier corresponding to the parameter set.

For example, the identifier 1 corresponding to a first parameter set indicates that the first parameter set is corresponding to a first TRP, and the identifier 2 corresponding to a second parameter set indicates that the second parameter set is corresponding to a second TRP.

The open loop power parameter includes at least one of:

(1) an open loop receiving end power target value;
(2) a partial path loss compensation factor; and
(3) a closed loop index.

In the solution provided by an embodiment of the present disclosure, a parameter set is used to indicate open loop power parameters corresponding to different TRPs for the terminal, and power control can be performed on the uplink transmission of each TRP among the plurality of TRPs. The power of each TRP is separately controlled, so that the interference between the TRPs is reduced, and the channel capacity of the system is also ensured.

On the basis of the above-mentioned embodiments, the network device can also indicate the closed loop power parameter corresponding to each TRP through the indication information, and can indicate the closed loop power parameter by means of setting a plurality of Transmit Power Control (TPC) domains or by means of a plurality of closed loop power parameter sets, and these two cases are described below.

First case: the indication information includes a plurality of TPC domains, and each TPC domain indicates the closed loop power parameter corresponding to one TRP.

In an embodiment of the present disclosure, the network device may indicate the power of uplink transmission corresponding to each TRP in a plurality of TRPs via the indication information, and the power of uplink transmission needs to be determined by the closed loop power parameter, then the network device may set a plurality of TPC domains in the indication information, and each TPC domain is corresponding to the closed loop power parameter corresponding to the TRP.

In some embodiments, the indication information is at least one of DCI 0_1, DCI 0_2, DCI 1_1, DCI 1_2, and DCI 2_2.

For example, as shown in Table 1, different values in the TPC domain correspond to different closed loop power parameters.

Table 1

| TPC domain field | Closed loop power parameter (dB) |
|---|---|
| 0 | -1 |
| 1 | 0 |
| 2 | 1 |
| 3 | 3 |

Referring to Table 1, different fields (code points) of each TPC domain correspond to different closed loop power parameters. In addition, Table 1 of the embodiment of the present disclosure is merely illustrative, and the TPC domain fields may also correspond to other closed loop power parameters, which is not limited in the embodiment of the present disclosure.

Second case: the indication information indicates a closed loop power parameter set including a plurality of closed loop power parameters.

In an embodiment of the present disclosure, the indication information indicates the closed loop power parameter corresponding to each TRP among the plurality of TRPs by indicating one closed loop power parameter set. That is to say, the closed loop power parameter set includes a plurality of closed loop power parameters, each closed loop power parameter is corresponding to one TRP, and the plurality of closed loop power parameters is corresponding to a plurality of TRP.

Alternatively, the indication information includes a TPC domain, that is to say, a plurality of closed loop power parameters can be indicated by one TPC domain in the indication information, and then the terminal can determine the closed loop power parameter corresponding to each TRP.

For example, as shown in Table 2, different values in the TPC domain correspond to different closed loop power parameters.

Table 2

| TPC domain field | First closed loop power parameter (dB) | Second closed loop power parameter (dB) |
|---|---|---|
| 0 | -1 | -4 |
| 1 | 0 | -1 |
| 2 | 1 | 2 |
| 3 | 3 | 4 |

In some embodiments, the network device needs to configure a correspondence between the indication information and the closed loop power parameter set for the terminal first, then the network device sends the correspondence between the indication information and the closed loop power parameter set to the terminal, and the terminal receives the correspondence between the indication information and the closed loop power parameter set sent by the network device, where the closed loop power parameter set includes a plurality of closed loop power parameters.

In the solution provided by the embodiment of the present disclosure, by setting a plurality of TPC domains in the indication information or indicating a closed-loop power parameter set, closed loop power parameters corresponding to different TRPs are indicated to the terminal, expanding the way of indicating closed loop power parameters. Moreover, in the case where a plurality of TRPs are configured for the terminal, a new power control method is provided to control the uplink transmission of each TRP in the plurality of TRPs. By controlling the power of each TRP separately, interference between TRPs is reduced and the channel capacity of the system is guaranteed.

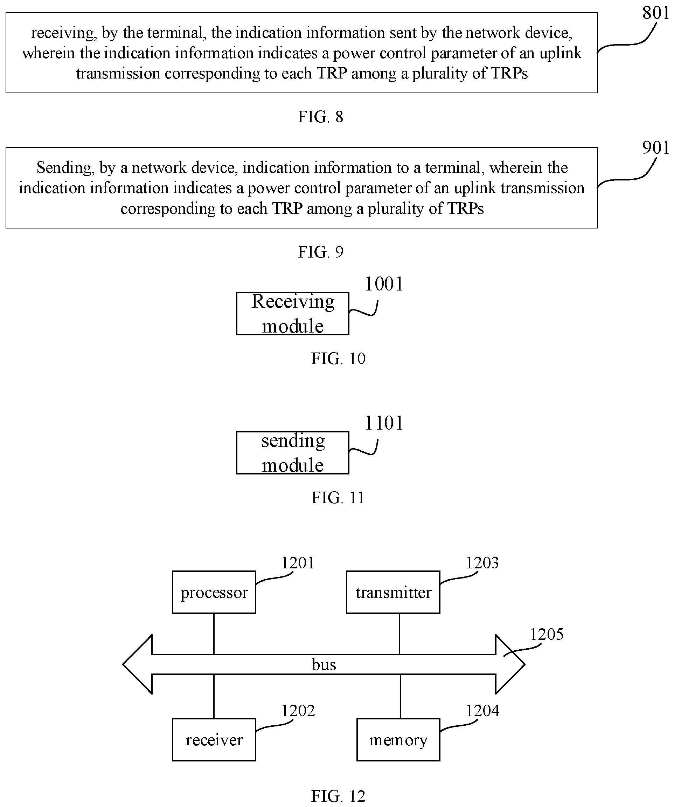

FIG. 8 shows a flow chart of a power control method according to an exemplary embodiment of the present disclosure, which, for example, can be applied to the terminal as shown in FIG. 1. The method includes at least some of following content.

In step 801, the terminal receives the indication information sent by the network device, wherein the indication information indicates the power control parameter of uplink transmission corresponding to each TRP among a plurality of TRPs.

In the embodiment of the present disclosure, communication can be performed between the network device and the terminal, and for the terminal, the terminal sending information to the network device refers to uplink transmission of the terminal, And for the terminal, the terminal can perform uplink transmission through the plurality of TRPs configured by the network device, and for each TRP, each TRP has a corresponding uplink transmission power. That is to say, when the terminal performs uplink transmission through different TRPs, it will use different power to transmit information.

After receiving the indication information sent by the network device, the terminal can determine the power control parameter for uplink transmission corresponding to each TRP according to the indication information, and then perform uplink transmission through the corresponding TRP based on the determined power control parameter for the uplink transmission.

When the terminal performs uplink transmission, the uplink transmission is performed according to the power of the uplink transmission corresponding to each TRP, and the network device needs to send indication information to the terminal, and indicates to the terminal the power control parameter of the uplink transmission corresponding to each TRP in a plurality of TRPs via the indication information.

In some embodiments, the power control parameter for uplink transmission refers to a power control parameter for an uplink channel, or refers to a power control parameter for an uplink signal, which is not limited in the embodiments of the present disclosure. Stated another way, the power control parameter for the uplink transmission in the embodiment of the present disclosure may be replaced with the power control parameter for the uplink channel. Or, the power control parameter for the uplink transmission in the embodiment of the present disclosure may be replaced with the power control parameter for the uplink signal.

Alternatively, the uplink transmission includes at least one of Sound Resource Signal (SRS), Physical Uplink Shared Channel (PUSCH), and Physical Uplink Control Channel (PUCCH).

In some embodiments, the power control parameter for uplink transmission corresponding to each TRP includes an open loop power parameter and a closed loop power parameter.

The open loop power parameter is used for compensating signal loss caused by path loss and shadow fading, and the closed loop power parameter refers to a power adjustment value indicated by the network device for a second uplink transmission of the terminal according to an uplink power measured on a first uplink transmission.

The trigger moment of the first uplink transmission is located before the trigger moment of the second uplink transmission, that is to say, the first uplink transmission is an uplink transmission performed previously by the terminal, and the second uplink transmission is an uplink transmission performed currently or later by the terminal. In addition, the closed loop power parameter can also be understood as a power adjustment value indicated by the network device for the current uplink transmission of the terminal according to the measured uplink power of the previous uplink transmission.

In the embodiment of the present disclosure, the indication information indicates the open loop power parameter and the closed loop power parameter, and then the terminal may determine the indicated open loop power parameter and closed loop power parameter according to the indication information, and further determine the power of the uplink transmission based on the open loop power parameter and the closed loop power parameter.

In some embodiments, the open loop power parameters include an open loop receiving end power target value, a partial path loss compensation factor, a closed loop index, and a path loss reference signal. According to the open loop power parameter and the closed loop power parameter, the following formula can be used to determine the power of uplink transmission:

$$P = \min\left[P_{CMAX}, \{A\} + \{B\} + \{C\}\right]$$

where, $P_{CMAX}$ is the maximum allowed uplink transmission power, A denotes an open loop portion, and the open loop portion is obtained by calculation from open loop power parameters $P_0$, *alpha,* and PL, P0 is the open loop receiving end power target value, alpha is the partial path loss compensation factor, and PL is a downlink path loss estimation value; B refers to a closed loop portion, and the closed loop portion is determined by a closed loop power parameter, i.e., a power control adjustment state value, and is used for dynamically adjusting the power of any uplink transmission of the terminal; C refers to other adjustments associated with information such as resource allocation, link adaptation, etc. The open loop portion and the closed loop portion need to be indicated by the indication information.

In some embodiments, the open loop power parameter is in a one-to-one correspondence with the transmission configuration indication (TCI) state.

Alternatively, the open loop power parameter is indicated by a Transmission Configuration Indication (TCI) state, and there are different relationships between TCI states and open loop power parameters.

Alternatively, the TCI state may be represented by a TCI state, which is not limited in the embodiments of the present disclosure. In addition, the TCI state in the embodiment of the present disclosure may be a joint TCI state, or an uplink TCI state.

In the embodiment of the present disclosure, the open loop power parameter and the TCI state are in a one-to-one correspondence, that is to say, one TCI state corresponds to one open loop power parameter.

Alternatively, the network device configures the terminal with a correspondence between the open loop power parameter and the TCI state.

For example, the network device configures a correspondence between the open loop power parameter and the TCI state for the terminal by configuring a TCI state list.

In some embodiments, the indication information indicates a plurality of TCI domains, each TCI domain indicating one TCI state.

In the embodiment of the present disclosure, the open loop power parameter and the TCI state are in a one-to-one correspondence, that is to say, one TCI state corresponds to one open loop power parameter.

In the embodiment of the present disclosure, the TCI state and the open loop power parameter are in a one-to-one correspondence, that is to say, the TCI state corresponds to one open loop power parameter, the open loop power parameter associated with each TCI state corresponds to the open loop power parameter of one TRP, and the open loop power parameter corresponding to each TRP can be indicated via the TCI domain. In addition, each TCI state indicated by the plurality of indication domains in the indication information is corresponding to a TCI state in a plurality of activated TCI states.

Alternatively, for each TCI domain, each code point of the TCI domain corresponds to one TCI state. Each TCI domain includes at least one bit, at least one bit can indicate a plurality of code points, and different code points indicate different TCI states. Furthermore, the code points may also be understood as values indicated by at least one bit, that is to say, at least one bit may indicate a plurality of values, and different values are corresponding to different TCI states.

For example, if one TCI domain includes 3 bits, then 8 values may be indicated by the TCI domain, that is to say, the network device may indicate one of 8 TCI states through the TCI domain.

In some embodiments, the terminal receives a plurality of first MAC-CEs, where each first MAC-CE is used to activate a plurality of TCI states corresponding to one TCI domain.

In the embodiment of the present disclosure, the network device activates a plurality of TCI states corresponding to one TCI domain in advance via the first MAC-CE, and further indicates one TCI state corresponding to the TCI domain via the indication information. In addition, for the network device, the network device sends a plurality of first MAC-CEs to the terminal, and one first MAC-CE activates a plurality of TCI states corresponding to one TCI domain, that is to say, one first MAC-CE is used for activating a plurality of TCI states corresponding to one TCI domain of one TRP, and the activation of the plurality of TCI states corresponding to the plurality of TCI is indicated by sending the plurality of first MAC-CEs.

For example, the first MAC-CE includes state information corresponding to each TCI state, where the state information being 1 indicates that the corresponding TCI state is active, and the state information being 0 indicates that the corresponding TCI state is inactive. An identifier for distinguishing a TCI domain is further included, the identifier indicating to which TCI domain the plurality of TCI states activated by the first MAC CE correspond. For example, if the identifier is 0, it is indicated that it corresponds to a first TCI domain, and if the identifier is 1, it is indicated that it corresponds to a second TCI domain.

For example, FIGS. 4 and 5 respectively show a format of a first MAC-CE, and the first MAC-CE of both formats can activate a plurality of TCI states corresponding to one TCI domain. As shown in FIG. 4, T is an identifier, and one first MAC-CE includes state information about N TCI states, and the state information corresponding to each TCI state indicates whether the TCI state is activated. Each row in FIG. 4 includes state information about 8 TCI states, and N/8 rows are used to configure whether N TCI states are activated. Or, as shown in FIG. 5, one first MAC-CE includes M TCI states, and one row corresponds to one TCI state, and the M TCI states are all activated TCI states.

It should be noted that in the embodiment of the present disclosure, the number of TCI states corresponding to each TCI domain activated by the network device is associated with the number of bits of the TCI domain. For example, if each TCI domain includes 3 bits indicating at most 8 TCI states, the network device activates at most 8 TCI states for each TCI domain, and if each TCI domain includes 2 bits indicating at most 4 TCI states, the network device activates at most 4 TCI states for each TCI domain. Or, it can also be understood that the network device activates a number of TCI states that is less than or equal to the number of code points included in the TCI domain.

In some embodiments, before the network device activates the TCI state via the first MAC-CE, it is required to configure a plurality of TCI states for the terminal so that the network device activates some of the TCI states in the plurality of TCI states via the first MAC-CE.

Alternatively, the network device sends a first configuration signaling to the terminal, and the terminal receives the first configuration signaling, where the first configuration signaling is used for configuring a TCI state list which includes a plurality of TCI states, and each TCI state is in a one-to-one correspondence with the open loop power parameter.

In the embodiment of the present disclosure, the network device configures a TCI state list containing a plurality of TCI states for the terminal through the first configuration signaling, and informs the terminal of each TCI state through the TCI state list.

In some embodiments, the first configuration signaling is an RRC signaling, or other higher layer signaling, which is not limited in the embodiment of the present disclosure.

Alternatively, one TCI state in the TCI state list configured by the first configuration information is corresponding to one open loop power parameter.

For example, as shown in FIG. 6, a plurality of TCI states are included in the TCI state list, and each TCI state corresponds to one element, i.e., to one open loop power parameter, for example, TCI state 1 corresponds to element 1 which corresponds to open loop power parameter 1, and TCI state 2 corresponds to element 2, i.e., to open loop power parameter 2.

In some embodiments, the indication information indicates a plurality of TCI states, and each TCI state is corresponding to one TRP.

In the embodiment of the present disclosure, the indication information is actually that for one TRP, one TCI state is activated, and it is sufficient to directly determine the TCI state as the TCI state corresponding to the TRP, without the need for further indication.

In some embodiments, the indication information includes a plurality of second MAC-CEs, wherein each second MAC-CE is used for activating one TCI state.

In the embodiment of the present disclosure, the indication information includes a plurality of second MAC-CEs, that is to say, each second MAC-CE in the plurality of second MAC-CEs can directly activate one TCI state, and then directly take the activated TCI state as the TCI state corresponding to one TRP, and each TCI state among the plurality of TCI states activated by the plurality of second MAC-CEs is corresponding to one TRP. The open loop power parameter associated with each activated TCI state is used for determining the power of the uplink transmission of the corresponding TRP.

Alternatively, the terminal receives the first configuration signaling to the terminal, where the first configuration signaling is used for configuring a TCI state list which includes a plurality of TCI states, and each TCI state is in a one-to-one correspondence with the open loop power parameter.

The first configuration signaling is similar to the first configuration signaling in the above-described embodiment, and will not be elaborated here.

In some embodiments, the indication information indicates one TCI domain, the TCI domain indicates a TCI state group, and the TCI state group includes a plurality of TCI states.

In an embodiment of the present disclosure, the network device may indicate a power control parameter of an uplink transmission corresponding to each TRP in a plurality of TRPs via the indication information, and the power control parameter of the uplink transmission includes an open loop power parameter; then the network device may indicate one TCI state group via the indication information, where the TCI state group includes a plurality of TCI states, and one TCI domain indicates one TCI state group, and each TCI state among the plurality of TCI states included in the TCI state group is associated with one open loop power parameter.

The number of TCI states included in one TCI state group is the same as the number of TRPs.

In some embodiments, the indication information is DCI 1_1 or DCI 1_2.

In some embodiments, each TCI state in the plurality of TCI states is associated with the open loop power parameter of one TRP, and the TCI state group indicated by the TCI domain is corresponding to one TCI state group in the plurality of activated TCI state groups.

In the embodiment of the present disclosure, the TCI state and the open loop power parameter are in a one-to-one correspondence, that is to say, the TCI state is associated with one open loop power parameter, the open loop power parameter indicated by each TCI state is corresponding to the open loop power parameter of one TRP, and the open loop power parameter corresponding to each TRP can be indicated via the indication information. In addition, the TCI state group indicated by the TCI domain in the indication information is corresponding to one TCI state group in the plurality of activated TCI state groups.

Alternatively, for the TCI domain in the indication information, the TCI domain uses code points to indicate the TCI state group. The TCI domain includes at least one bit, at least one bit can indicate a plurality of code points, and different code points indicate different TCI state groups. Furthermore, the code points may also be understood as values indicated by at least one bit, that is to say, at least one bit may indicate a plurality of values, and different values are corresponding to different sets of TCI states.

For example, if one TCI domain includes 3 bits, then 8 values may be indicated by the TCI domain, that is to say, the network device may indicate one TCI state group of the 8 TCI state groups through the TCI domain.

In some embodiments, the network device informs the terminal of the active TCI state group through the MAC-CE.

The network device sends a third MAC-CE to the terminal, and the terminal receives the third MAC-CE, wherein the third MAC-CE is used for activating a plurality of TCI state groups corresponding to a corresponding TCI domain.

In the embodiment of the present disclosure, the network device activates a plurality of TCI state groups corresponding to one TCI domain in advance via the third MAC-CE, and then indicates one TCI state group indicated by the TCI domain via the indication information.

For example, the description is made with the example that 2 TCI states are included in each TCI state group. As shown in FIG. 7, the third MAC-CE includes 2N TCI states, and every two TCI states are in a TCI state group, where the TCI state $ID_{0,1}$ and the TCI state $ID_{0,2}$ are in the TCI state group 0, the TCI state $ID_{1,1}$ and the TCI state $ID_{1,2}$ are in the TCI state group 1, and so on, the TCI state $ID_{N,1}$ and the TCI state $ID_{N,2}$ are in the TCI state group N.

It should be noted that in the embodiment of the present disclosure, the number of TCI state groups corresponding to the TCI domain activated by the network device is associated with the number of bits of the TCI domain. For example, if the TCI domain including 3 bits indicates at most 8 TCI state groups, the network device activates at most 8 TCI state groups for the TCI domain, and if the TCI domain including 2 bits indicates at most 4 TCI state groups, the network device activates at most 4 TCI state groups for the TCI domain. Or, it can also be understood that the network device activates a number of TCI states that is less than or equal to the number of code points included in the TCI domain.

In some embodiments, before the network device activates the TCI state group via the third MAC-CE, it is required to configure a plurality of TCI states for the terminal so that the network device activates some of the TCI states in the plurality of TCI states via the third MAC-CE.

Alternatively, the terminal receives the second configuration signaling, where the second configuration signaling is used for configuring a TCI state list, and the TCI state list includes a plurality of TCI states.

In the embodiment of the present disclosure, the network device configures a TCI state list containing a plurality of TCI states for the terminal via the second configuration signaling, and configures the plurality of TCI states for the terminal via the TCI state list, and the network device can activate some TCI states in the plurality of configured TCI states via the third MAC-CE, and these TCI states belong to the same TCI state group.

In some embodiments, the indication information indicates one TCI state group, and the TCI state group includes a plurality of TCI states.

In the embodiment of the present disclosure, the indication information sent by the network device actually activates one TCI state group, where each TCI state in a plurality of TCI states included in the TCI state group is corresponding to one TRP, and the TCI state included in the TCI state group is directly determined to be the TCI state corresponding to the TRP, without the need for further indication.

In some embodiments, the indication is a fourth MAC-CE and the fourth MAC-CE is used to activate one TCI state group.

In the embodiment of the present disclosure, the indication information is a fourth MAC-CE, that is to say, a TCI state group is directly activated via the fourth MAC-CE, and then the TCI state included in the activated TCI state group is directly taken as the TCI state corresponding to the TRP.

Alternatively, the terminal receives a second configuration signaling, where the second configuration signaling is used for configuring a TCI state list which includes a plurality of TCI states, and each TCI state is in a one-to-one correspondence with the open loop power parameter.

The second configuration signaling is similar to the first configuration signaling in the above-described embodiment, and will not be elaborated here.

In the embodiment of the present disclosure, the indication information sent by the network device actually activates a TCI state group, where each TCI state in a plurality of TCI states included in the TCI state group corresponds to a TRP, and the TCI state included in the TCI state group is directly determined to be the TCI state corresponding to the TRP, with the need of further indication.

In some embodiments, the indication information is a fourth MAC-CE, and the fourth MAC-CE is used to activate one TCI state group.

In the embodiment of the present disclosure, the indication information is a fourth MAC-CE, that is to say, a TCI state group is directly activated via the fourth MAC-CE, and then the TCI state included in the activated TCI state group is directly taken as the TCI state corresponding to the TRP.

Alternatively, the terminal receives the second configuration signaling, where the second configuration signaling is used for configuring a TCI state list which includes a plurality of TCI states, and each TCI state is in a one-to-one correspondence with the open loop power parameter.

The second configuration signaling is similar to the first configuration signaling in the above-described embodiment, and will not be elaborated here.

In some embodiments, the open loop power parameter includes at least one of:

an open loop receiving end power target value;
a partial path loss compensation factor;
a closed loop index; and
a path loss reference signal.

In some embodiments, the indication information indicates a plurality of parameter sets, and each parameter set is used for indicating the open loop power parameter corresponding to one TRP.

In the embodiment of the present disclosure, the network device sends the indication information to the terminal, where the indication information indicates a plurality of parameter sets, and each parameter set indicates the open loop power parameter corresponding to one TRP. Therefore, after receiving the indication information sent by the network device, the terminal can determine the plurality of parameter sets according to the indication information, and then determine the open loop power parameter of the TRP corresponding to each parameter set from the plurality of parameter sets.

Alternatively, the indication information is carried in Radio Resource Control (RRC) or MAC-CE.

In some embodiments, the terminal may determine the TRP corresponding to each parameter set in a predefined manner, that is to say, determine the TRP corresponding to each parameter set in an implicitly indicated manner. Alternatively, the indication information also carries the identification of the TRP corresponding to each parameter set, i.e., indicating the TRP corresponding to each parameter set by means of explicit indication.

For example, the indication information indicates a plurality of parameter sets, and the terminal may determine a corresponding TRP according to the position of each parameter set. For example, the first parameter set is the open loop power parameter for uplink transmission corresponding to the first TCI state, and the second parameter set is the open loop power parameter for uplink transmission corresponding to the second TCI state.

As another example, when the indication information is sent through the RRC or the MAC-CE, the indication information includes an identifier corresponding to the parameter set, and the TRP corresponding to the parameter set is indicated by the identifier corresponding to the parameter set.

For example, the identifier 1 corresponding to a first parameter set indicates that the first parameter set corresponds to a first TRP, and the identifier 2 corresponding to a second parameter set indicates that the second parameter set corresponds to a second TRP.

In some embodiments, the open loop power parameter includes at least one of:

an open loop receiving end power target value;
a partial path loss compensation factor; and
a closed loop index.

In some embodiments, the indication information includes a plurality of transmit power control (TPC) domains, each TPC domain indicating the closed loop power parameter corresponding to one TRP.

In an embodiment of the present disclosure, the network device may indicate the power of uplink transmission corresponding to each TRP in a plurality of TRPs via the indication information, and the power of uplink transmission needs to be determined by the closed loop power parameter, then the network device may set a plurality of TPC domains in the indication information, and each TPC domain corresponds to the closed loop power parameter corresponding to the TRP.

In some embodiments, the indication information is at least one of DCI 0_1, DCI 0_2, DCI 1_1, DCI 1_2, and DCI 2_2.

For example, as shown in Table 3, different values in the TPC domain correspond to different closed loop power parameters.

Table 3

| TPC domain field | Closed loop power parameter (dB) |
|---|---|
| 0 | -1 |
| 1 | 0 |
| 2 | 1 |
| 3 | 3 |

Referring to Table 3, different fields of each TPC domain correspond to different closed loop power parameters. In addition, Table 3 of the embodiment of the present disclosure is merely illustrative, and the TPC domain field may also correspond to other closed loop power parameters, which is not limited in the embodiments of the present disclosure.

In some embodiments, the indication information indicates a closed loop power parameter set, where the closed loop power parameter set includes a plurality of closed loop power parameters.

In an embodiment of the present disclosure, the indication information indicates the closed loop power parameter corresponding to each TRP among the plurality of TRPs by indicating one closed loop power parameter set. That is to say, the closed loop power parameter set includes a plurality of closed loop power parameters, each closed loop power parameter is corresponding to one TRP, and the plurality of closed loop power parameters is corresponding to a plurality of TRP.

Alternatively, the indication information includes a TPC domain, that is to say, a plurality of closed loop power parameters can be indicated by one TPC domain in the indication information, and then the terminal can determine the closed loop power parameter corresponding to each TRP.

For example, as shown in Table 4, different values in the TPC domain correspond to different closed loop power parameters.

Table 4

| TPC domain field | First closed loop power parameter (dB) | Second closed loop power parameter (dB) |
|---|---|---|
| 0 | -1 | -4 |
| 1 | 0 | -1 |
| 2 | 1 | 2 |
| 3 | 3 | 4 |

In some embodiments, the network device needs to firstly configure a correspondence between the indication information and the closed loop power parameter set for the terminal, and the terminal receives the correspondence between the indication information and the closed loop power parameter set sent by the network device, where the closed loop power parameter set includes a plurality of closed loop power parameters.

According to the scheme provided by the present disclosure, in the case of configuring multiple TRPs for the terminal, a new power control method is provided to control the uplink transmission of each TRP in multiple TRPs. By controlling the power of each TRP separately, interference between TRPs is reduced and the channel capacity of the system is also ensured.

FIG. 9 shows a flow chart of a power control method according to an exemplary embodiment of the present disclosure, which, for example, can be applied to the network device as shown in FIG. 1. The method includes at least some of following content.

In step 901, the network device sends indication information to the terminal, wherein the indication information indicates a power control parameter of an uplink transmission corresponding to each TRP among a plurality of TRPs.

In the embodiment of the present disclosure, communication can be performed between the network device and the terminal, and for the terminal, the terminal sending information to the network device refers to uplink transmission of the terminal. And for a terminal, the terminal can perform uplink transmission through a plurality of TRPs configured by the network device, and for each TRP, each TRP has a corresponding uplink transmission power. That is to say, when the terminal performs uplink transmission through different TRPs, it will use different power to transmit information.

In some embodiments, the power of the uplink transmission refers to the power of the uplink channel, or the uplink transmission refers to the power of the uplink signal, which is not limited in the embodiments of the present disclosure. Stated another way, the power for the uplink transmission in the embodiment of the present disclosure may be replaced with the power control parameter for the uplink channel. Or, the power for the uplink transmission in the embodiment of the present disclosure may be replaced with the power control parameter for the uplink signal.

Alternatively, the uplink transmission includes at least one of Sound Resource Signal (SRS), Physical Uplink Shared Channel (PUSCH), and Physical Uplink Control Channel (PUCCH).

In some embodiments, the power control parameter of uplink transmission corresponding to each TRP includes an open loop power parameter and a closed loop power parameter.

The open loop power parameter is used for compensating signal loss caused by path loss and shadow fading, and the closed loop power parameter refers to a power adjustment value indicated by the network device for a second uplink transmission of the terminal according to a measured uplink power of a first uplink transmission.

The trigger moment of the first uplink transmission is located before the trigger moment of the second uplink transmission, that is to say, the first uplink transmission is an uplink transmission performed previously by the terminal, and the second uplink transmission is an uplink transmission performed currently or later by the terminal. In addition, the closed loop power parameter can also be understood as a power adjustment value indicated by the network device for the current uplink transmission of the terminal according to the measured uplink power of the previous uplink transmission.

In the embodiment of the present disclosure, the indication information indicates an open loop power parameter and a closed loop power parameter, and then the terminal may determine the indicated open loop power parameter and closed loop power parameter according to the indication information, and further determine the power of the uplink transmission based on the open loop power parameter and the closed loop power parameter.

In some embodiments, the open loop power parameters include an open loop receiving end power target value, a partial path loss compensation factor, a closed loop index, and a path loss reference signal. According to the open loop power parameter and the closed loop power parameter, the following formula can be used to determine the power of uplink transmission:

$$P = \min\left[P_{CMAX}, \{A\} + \{B\} + \{C\}\right]$$

where, $P_{CMAX}$ is the maximum allowed uplink transmission power, A denotes an open loop portion, and the open loop portion is obtained by calculation from open loop power parameters $P_0$, *alpha,* and PL, P0 is the open loop receiving end power target value, alpha is the partial path loss compensation factor, and PL is a downlink path loss estimation value; B refers to a closed loop portion, and the closed loop portion is determined by the closed loop power parameter, i.e., a power control adjustment state value, and is used for dynamically adjusting the power of any uplink transmission of a terminal; C refers to other adjustments associated with information such as resource allocation, link adaptation, etc. The open loop portion and the closed loop portion need to be indicated by the indication information.

In some embodiments, the open loop power parameter is in a one-to-one correspondence with the transmission configuration indication (TCI) state.

Alternatively, the open loop power parameter is indicated by a Transmission Configuration Indication (TCI) state, and there are different relationships between the TCI states and the open loop power parameters.

Alternatively, the TCI state may be represented by a TCI state, which is not limited in the embodiments of the present disclosure. In addition, the TCI state in the embodiment of the present disclosure may be a joint TCI state, or an uplink TCI state.

In the embodiment of the present disclosure, the open loop power parameter and the TCI state are in a one-to-one correspondence, that is to say, one TCI state corresponds to one open loop power parameter.

In some embodiments, the indication information indicates a plurality of TCI domains, each TCI domain indicating one TCI state.

In the embodiment of the present disclosure, the open loop power parameter and the TCI state are in a one-to-one correspondence, that is to say, one TCI state corresponds to one open loop power parameter.

Alternatively, the network device configures the terminal with a correspondence between the open loop power parameter and the TCI state.

For example, the network device configures a correspondence between the open loop power parameter and the TCI state for the terminal by configuring a TCI state list.

In the embodiment of the present disclosure, the TCI state and the open loop power parameter are in a one-to-one correspondence, that is to say, the TCI state corresponds to one open loop power parameter, the open loop power parameter associated with each TCI state corresponds to the open loop power parameter of one TRP, and the open loop power parameter corresponding to each TRP can be indicated via the TCI domain. In addition, each TCI state indicated by the plurality of indication domains in the indication information is corresponding to one TCI state in a plurality of activated TCI states.

Alternatively, for each TCI domain, each code point of the TCI domain corresponds to one TCI state. Each TCI domain includes at least one bit, at least one bit can indicate a plurality of code points, and different code points indicate different TCI states. Furthermore, code points may also be understood as values indicated by at least one bit, that is to say, at least one bit may indicate a plurality of values, and different values are corresponding to different TCI states.

For example, if one TCI domain includes 3 bits, then 8 values may be indicated by the TCI domain, that is to say, the network device may indicate one TCI state of 8 TCI states through the TCI domain.

In some embodiments, the network device sends a plurality of first MAC-CEs, where each first MAC-CE is used to activate a plurality of TCI states corresponding to one TCI domain.

In the embodiment of the present disclosure, the network device activates a plurality of TCI states corresponding to one TCI domain in advance via the first MAC-CE, and further indicates one TCI state corresponding to the TCI domain via the indication information. In addition, for the network device, the network device sends a plurality of first MAC-CEs to the terminal, and one first MAC-CE activates a plurality of TCI states corresponding to one TCI domain, that is to say, one first MAC-CE is used for activating a plurality of TCI states corresponding to one TCI domain of one TRP, and the activation of the plurality of TCI states corresponding to the plurality of TCI is indicated by sending the plurality of first MAC-CEs.

For example, the first MAC-CE includes state information corresponding to each TCI state, where the state information being 1 indicates that the corresponding TCI state is active, and the state information being 0 indicates that the corresponding TCI state is inactive. An identifier for distinguishing a TCI domain is further included, the identifier indicating to which TCI domain the plurality of TCI states activated by the first MAC CE correspond. For example, if the identifier is 0, it is indicated that it corresponds to a first TCI domain, and if the identifier is 1, it is indicated that it corresponds to a second TCI domain.

For example, FIGS. 4 and 5 respectively show a format of the first MAC-CE, and the first MAC-CE of both formats can activate a plurality of TCI states corresponding to one TCI domain. As shown in FIG. 4, one first MAC-CE includes state information about N TCI states, and the state information corresponding to each TCI state indicates whether the TCI state is activated. Each row in FIG. 4 includes state information about 8 TCI states, and N/8 rows are used to indicate whether N TCI states are activated. Or, as shown in FIG. 5, one first MAC-CE includes M TCI states, and one row corresponds to one TCI state, and the M TCI states are all activated TCI states.

It should be noted that in the embodiment of the present disclosure, the number of TCI states corresponding to each TCI domain activated by the network device is associated with the number of bits of the TCI domain. For example, if each TCI domain includes 3 bits indicating at most 8 TCI states, the network device activates at most 8 TCI states for each TCI domain, and if each TCI domain includes 2 bits indicating at most 4 TCI states, the network device activates at most 4 TCI states for each TCI domain. Or, it can also be understood that the network device activates a number of TCI states that is less than or equal to the number of code points included in the TCI domain.

In some embodiments, before the network device activates the TCI state via the first MAC-CE, it is required to configure a plurality of TCI states for the terminal, so that the network device activates some TCI states in the plurality of TCI states via the first MAC-CE.

Alternatively, the network device sends a first configuration signaling to the terminal, where the first configuration signaling is used for configuring a TCI state list which includes a plurality of TCI states, and each TCI state is in a one-to-one correspondence with the open loop power parameter.

In the embodiment of the present disclosure, the network device configures a TCI state list containing a plurality of TCI states for a terminal through the first configuration signaling, and informs the terminal of each TCI state through the TCI state list.

In some embodiments, the first configuration signaling is an RRC signaling, or other higher layer signaling, which is not limited in the embodiments of the present disclosure.

Alternatively, one TCI state in the TCI state list configured by the first configuration information corresponds to one open loop power parameter.

For example, as shown in FIG. 6, a plurality of TCI states are included in the TCI state list, and each TCI state corresponds to one element, i.e., to one open loop power parameter, for example, TCI state 1 corresponds to element 1 which corresponds to open loop power parameter 1, and TCI state 2 corresponds to element 2, i.e., to open loop power parameter 2.

In some embodiments, the indication information indicates a plurality of TCI states, and each TCI state is corresponding to one TRP.

In the embodiment of the present disclosure, the indication information is actually that for one TRP, one TCI state is activated, and it is sufficient to directly determine the TCI state as the TCI state corresponding to the TRP, without the need for further indication.

In some embodiments, the indication information includes a plurality of second MAC-CEs, wherein each second MAC-CE is used for activating one TCI state.

In the embodiment of the present disclosure, the indication information includes a plurality of second MAC-CEs, that is to say, each second MAC-CE in the plurality of second MAC-CEs can directly activate one TCI state, and then the activated TCI state can be directly taken as the TCI state corresponding to one TRP, and each TCI state among the plurality of TCI states activated by the plurality of second MAC-CEs corresponds to one TRP. The open loop power parameter associated with each activated TCI state is used for determining the power of the uplink transmission of a corresponding TRP.

Alternatively, the network device sends the first configuration signaling, where the first configuration signaling is used for configuring a TCI state list which includes a plurality of TCI states, and each TCI state is in a one-to-one correspondence with the open loop power parameter.

The first configuration signaling is similar to the first configuration signaling in the above-described embodiment, and will not be elaborated here.

In some embodiments, the indication information indicates one TCI domain, the TCI domain indicates a TCI state group, and the TCI state group includes a plurality of TCI states.

In an embodiment of the present disclosure, the network device may indicate the power control parameter of the uplink transmission corresponding to each TRP in a plurality of TRPs via the indication information, and the power control parameter of the uplink transmission includes an open loop power parameter; then the network device may indicate one TCI state group via the indication information, where the TCI state group includes a plurality of TCI states, and one TCI domain indicates one TCI state group, and each TCI state among the plurality of TCI states included in the TCI state group is associated with one open loop power parameter.

The number of TCI states included in one TCI state group is the same as the number of TRPs.

In some embodiments, the indication information is DCI 1_1 or DCI 1_2.

In some embodiments, each TCI state in the plurality of TCI states is associated with the open loop power parameter of one TRP, and the TCI state group indicated by the TCI domain corresponds to a TCI state group in the plurality of activated TCI state groups.

In the embodiment of the present disclosure, the TCI state and the open loop power parameter are in a one-to-one correspondence, that is to say, the TCI state is associated with one open loop power parameter, the open loop power parameter indicated by each TCI state corresponds to the open loop power parameter of one TRP, and the open loop power parameter corresponding to each TRP can be indicated via the indication information. In addition, the TCI state group indicated by the TCI domain in the indication information corresponds to one TCI state group of a plurality of activated TCI state groups.

Alternatively, for the TCI domain in the indication information, the TCI domain uses code points to indicate the TCI state group. The TCI domain includes at least one bit, at least one bit can indicate a plurality of code points, and different code points indicate different TCI state groups. Furthermore, code points may also be understood as values indicated by at least one bit, that is to say, at least one bit may indicate a plurality of values, and different values are corresponding to different TCI state sets.

For example, if one TCI domain includes 3 bits, then 8 values may be indicated by the TCI domain, that is to say, the network device may indicate one TCI state group of the 8 TCI state groups through the TCI domain.

In some embodiments, the network device informs the terminal of the active TCI state group through the MAC-CE.

The network device sends a third MAC-CE to the terminal, wherein the third MAC-CE is used for activating a plurality of TCI state groups corresponding to a corresponding TCI domain.

In the embodiment of the present disclosure, the network device activates a plurality of TCI state groups corresponding to a TCI domain in advance via the third MAC-CE, and then indicates one TCI state group indicated by the TCI domain via the indication information.

For example, the description is made with the example that 2 TCI states are included in each TCI state group. As shown in FIG. 7, the third MAC-CE includes 2N TCI states, and every two TCI states are in a TCI state group, where the TCI state $ID_{0,1}$ and the TCI state $ID_{0,2}$ are in the TCI state group 0, the TCI state $ID_{1,1}$ and the TCI state $ID_{1,2}$ are in the TCI state group 1, and so on, the TCI state $ID_{N,1}$ and the TCI state $ID_{N,2}$ are in the TCI state group N.

It should be noted that in the embodiment of the present disclosure, the number of TCI state groups corresponding to the TCI domain activated by the network device is associated with the number of bits of the TCI domain. For example, if the TCI domain including 3 bits indicates at most 8 TCI state groups, the network device activates at most 8 TCI state groups for the TCI domain, and if the TCI domain including 2 bits indicates at most 4 TCI state groups, the network device activates at most 4 TCI state groups for the TCI domain. Or, it can also be understood that the network device activates a number of TCI states that is less than or equal to the number of code points included in the TCI domain.

In some embodiments, before the network device activates the TCI state group via the third MAC-CE, it is required to configure a plurality of TCI states for the terminal, so that the network device activates some of the TCI states in the plurality of TCI states via the third MAC-CE.

Alternatively, the network device sends a second configuration signaling to the terminal, where the second configuration signaling is used for configuring a TCI state list, where the TCI state list includes a plurality of TCI states.

In the embodiment of the present disclosure, the network device configures a TCI state list containing a plurality of TCI states for the terminal via the second configuration signaling, configures the plurality of TCI states for the terminal via the TCI state list, and the network device can activate some TCI states in the plurality of configured TCI states via a third MAC-CE, and the TCI states belong to the same TCI state group.

In some embodiments, the indication information indicates one TCI state group, and the TCI state group includes a plurality of TCI states.

In the embodiment of the present disclosure, the indication information sent by the network device actually activates a TCI state group, where each TCI state in a plurality of TCI states included in the TCI state group corresponds to a TRP, and the TCI state included in the TCI state group is directly determined to be the TCI state corresponding to the TRP, without the need for further indication.

In some embodiments, the indication information is a fourth MAC-CE, and the fourth MAC-CE is used to activate one TCI state group.

In the embodiment of the present disclosure, the indication information is a fourth MAC-CE, that is to say, a TCI state group is directly activated via the fourth MAC-CE, and then the TCI state included in the activated TCI state group is directly taken as the TCI state corresponding to the TRP.

Alternatively, the network device sends a second configuration signaling to the terminal, where the second configuration signaling is used for configuring a TCI state list which includes a plurality of TCI states, and each TCI state is in a one-to-one correspondence with the open loop power parameter.

The second configuration signaling is similar to the first configuration signaling in the above-described embodiment, and will not be elaborated here.

In the embodiment of the present disclosure, the indication information sent by the network device actually activates a TCI state group, where each TCI state in a plurality of TCI states included in the TCI state group corresponds to a TRP, and the TCI state included in the TCI state group is directly determined to be the TCI state corresponding to the TRP, without the need for further indication.

In some embodiments, the indication information is a fourth MAC-CE, and the fourth MAC-CE is used to activate one TCI state group.

In the embodiment of the present disclosure, the indication information is a fourth MAC-CE, that is to say, a TCI state group is directly activated via the fourth MAC-CE, and then the TCI state included in the activated TCI state group is directly taken as the TCI state corresponding to the TRP.

Alternatively, the network device sends the second configuration signaling to the terminal, where the second configuration signaling is used for configuring a TCI state list which includes a plurality of TCI states, and each TCI state is in a one-to-one correspondence with the open loop power parameter.

The second configuration signaling is similar to the first configuration signaling in the above-described embodiment, and will not be elaborated here.

In some embodiments, the open loop power parameter includes at least one of:

an open loop receiving end power target value;
a partial path loss compensation factor;
a closed loop index; and
a path loss reference signal.

In some embodiments, the indication information indicates a plurality of parameter sets, and each parameter set is used for indicating the open loop power parameter corresponding to one TRP.

In the embodiment of the present disclosure, the network device sends the indication information to the terminal, where the indication information indicates a plurality of parameter sets, and each parameter set indicates the open loop power parameter corresponding to one TRP; therefore, after receiving the indication information sent by the network device, the terminal can determine the plurality of parameter sets according to the indication information, and then determine the open loop power parameter of the TRP corresponding to each parameter set from the plurality of parameter sets.

Alternatively, the indication information is carried in Radio Resource Control (RRC) or MAC-CE.

In some embodiments, the terminal may determine the TRP corresponding to each parameter set in a predefined manner, that is to say, determine the TRP corresponding to each parameter set in an implicitly indicated manner. Alternatively, the indication information also carries the identification of the TRP corresponding to each parameter set, i.e., indicating the TRP corresponding to each parameter set by means of explicit indication.

For example, the indication information indicates a plurality of parameter sets, and the terminal may determine a corresponding TRP according to the position of each parameter set. For example, the first parameter set is the open loop power parameter for uplink transmission corresponding to the first TCI state, and the second parameter set is the open loop power parameter for uplink transmission corresponding to the second TCI state.

As another example, when the indication information is sent through the RRC or the MAC-CE, the indication information includes an identifier corresponding to the parameter set, and the TRP corresponding to the parameter set is indicated by the identifier corresponding to the parameter set.

For example, the identifier 1 corresponding to a first parameter set indicates that the first parameter set corresponds to a first TRP, and the identifier 2 corresponding to a second parameter set indicates that the second parameter set corresponds to a second TRP.

In some embodiments, the open loop power parameter includes at least one of:

an open loop receiving end power target value;
a partial path loss compensation factor; and
a closed loop index.

In some embodiments, the indication information includes a plurality of transmit power control (TPC) domains, each TPC domain indicating the closed loop power parameter corresponding to a TRP.

In an embodiment of the present disclosure, the network device may indicate the power of uplink transmission corresponding to each TRP in a plurality of TRPs via the indication information, and the power of uplink transmission needs to be determined by the closed loop power parameter, then the network device may set a plurality of TPC domains in the indication information, and each TPC domain corresponds to the closed loop power parameter corresponding to the TRP.

In some embodiments, the indication information is at least one of DCI 0_1, DCI 0_2, DCI 1_1, DCI 1_2, and DCI 2_2.

For example, as shown in Table 5, different values in the TPC domain correspond to different closed loop power parameters.

Table 5

| TPC domain field | Closed loop power parameter (dB) |
|---|---|
| 0 | -1 |
| 1 | 0 |
| 2 | 1 |
| 3 | 3 |

Referring to Table 5, different fields of each TPC domain correspond to different closed loop power parameters. In addition, Table 5 of the embodiment of the present disclosure is merely illustrative, and the TPC domain field may also correspond to other closed loop power parameters, which is not limited in the embodiments of the present disclosure.

In some embodiments, the indication information indicates a closed loop power parameter set, where the closed loop power parameter set includes a plurality of closed loop power parameters.

In an embodiment of the present disclosure, the indication information indicates the closed loop power parameter corresponding to each TRP among the plurality of TRPs by indicating one closed loop power parameter set. That is to say, the closed loop power parameter set includes a plurality of closed loop power parameters, each closed loop power parameter is corresponding to one TRP, and the plurality of closed loop power parameters is corresponding to a plurality of TRPs.

Alternatively, the indication information includes a TPC domain, that is to say, a plurality of closed loop power parameters can be indicated by one TPC domain in the indication information, and then the terminal can determine the closed loop power parameter corresponding to each TRP.

For example, as shown in Table 6, different values in the TPC domain correspond to different closed loop power parameters.

Table 6

| TPC domain field | First closed loop power parameter (dB) | Second closed loop power parameter (dB) |
|---|---|---|
| 0 | -1 | -4 |
| 1 | 0 | -1 |
| 2 | 1 | 2 |
| 3 | 3 | 4 |

In some embodiments, the network device needs to firstly configure a correspondence between the indication information and the closed loop power parameter set for the terminal, and the network device sends the correspondence between the indication information and the closed loop power parameter set to the terminal, where the closed loop power parameter set includes a plurality of closed loop power parameters.

According to the scheme provided by the present disclosure, in the case of configuring multiple TRPs for the terminal, a new power control method is provided to control the uplink transmission of each TRP in multiple TRPs. By controlling the power of each TRP separately, interference between TRPs is reduced and the channel capacity of the system is also ensured.

FIG. 10 shows a block diagram of a power control apparatus according to an exemplary embodiment of the present disclosure. Referring to FIG. 10, the apparatus includes:

a receiving module 1001, configured to receive indication information sent by a network device, wherein the indication information indicates a power control parameter of an uplink transmission corresponding to each TRP among a plurality of transmission and reception points (TRPs).

In some embodiments, the power of uplink transmission corresponding to each TRP is determined by an open loop power parameter and a closed loop power parameter.

The open loop power parameter is used for compensating signal loss caused by path loss and shadow fading, and the closed loop power parameter refers to a power adjustment value indicated by the network device for a second uplink transmission of the terminal according to a measured uplink power of a first uplink transmission.

In some embodiments, the open loop power parameter is in a one-to-one correspondence with the transmission configuration indication (TCI) state.

In some embodiments, the indication information indicates a plurality of TCI domains, each TCI domain indicating one TCI state.

In some embodiments, each TCI state is associated with the open loop power parameter of one TRP, and the TCI state indicated by the TCI domain corresponds to one TCI state among a plurality of activated TCI states.

In some embodiments, the receiving module 801 is further configured to receive a plurality of first medium access control control elements (MAC-CEs), where each of the first MAC-CEs is used for activating a plurality of TCI states corresponding to one TCI domain.

In some embodiments, the indication information indicates a plurality of TCI states, and each TCI state is corresponding to one TRP.

In some embodiments, the indication information includes a plurality of second MAC-CEs, and each second MAC-CE is used for activating one TCI state.

In some embodiments, the receiving module 1001 is further configured to receive a first configuration signaling to the terminal, where the first configuration signaling is used for configuring a TCI state list which includes a plurality of TCI states, and each TCI state is in a one-to-one correspondence with the open loop power parameter.

In some embodiments, the indication information indicates one TCI domain, the TCI domain indicates a TCI state group, and the TCI state group includes a plurality of TCI states.

In some embodiments, each TCI state in the plurality of TCI states is associated with the open loop power parameter of one TRP, and the TCI state group indicated by the TCI domain corresponds to a TCI state group of the plurality of activated TCI state groups.

In some embodiments, the receiving module 1001 is further configured to receive a third MAC-CE, where the third MAC-CE is configured to activate a plurality of TCI state groups corresponding to the TCI domain.

In some embodiments, the indication information indicates one TCI state group, and the TCI state group includes a plurality of TCI states.

In some embodiments, the indication is a fourth MAC-CE, and the fourth MAC-CE is used to activate one TCI state group.

In some embodiments, the receiving module 1001 is further configured to receive a second configuration signaling, where the second configuration signaling is used for configuring a TCI state list which includes a plurality of TCI state groups, and each TCI state included in each TCI state group is in a one-to-one correspondence with the open loop power parameter.

In some embodiments, the open loop power parameter includes at least one of:

an open loop receiving end power target value;
a partial path loss compensation factor;
a closed loop index; and
a path loss reference signal.

In some embodiments, the indication information indicates a plurality of parameter sets, and each parameter set is used for indicating the open loop power parameter corresponding to one TRP.

In some embodiments, the indication information is carried in a radio resource control (RRC) or MAC-CE.

In some embodiments, the open loop power parameter includes at least one of:

an open loop receiving end power target value;
a partial path loss compensation factor; and
a closed loop index.

In some embodiments, the indication information includes a plurality of transmit power control (TPC) domains, and each TPC domain indicates the closed loop power parameter corresponding to one TRP.

In some embodiments, the indication information indicates a closed loop power parameter set, where the closed loop power parameter set includes a plurality of closed loop power parameters.

In some embodiments, the receiving module 1001 is further configured to receive a correspondence between the indication information and the closed loop power parameter set sent by the network device, where the closed loop power parameter set includes a plurality of closed loop power parameters.

It should be noted that the apparatus provided in the above-mentioned embodiments is merely exemplified by the division of the above-mentioned functional modules when realizing the functions thereof, and in practice, the above-mentioned function allocation can be performed by different functional modules according to needs, i.e., the internal structure of a device is divided into different functional modules to perform all or part of the functions described above. In addition, the apparatus and method embodiments provided in the above embodiments belong to the same concept, and the specific implementation process is detailed in the method embodiments, which will not be repeated here.

FIG. 11 shows a block diagram of another power control apparatus according to an exemplary embodiment of the present disclosure. Referring to FIG. 11, the apparatus includes:

a sending module 1101, configured to send indication information to a terminal, where the indication information indicates a power control parameter of an uplink transmission corresponding to each TRP among a plurality of transmission and reception points (TRPs).

In some embodiments, the power of uplink transmission corresponding to each TRP is determined by an open loop power parameter and a closed loop power parameter.

The open loop power parameter is used for compensating signal loss caused by path loss and shadow fading, and the closed loop power parameter refers to a power adjustment value indicated by the network device for a second uplink transmission of the terminal according to a measured uplink power of a first uplink transmission.

In some embodiments, the open loop power parameter is in a one-to-one correspondence with the transmission configuration indication (TCI) state.

In some embodiments, the indication information indicates a plurality of TCI domains, each TCI domain indicating one TCI state.

In some embodiments, each TCI state is associated with the open loop power parameter of one TRP, and the TCI state indicated by the TCI domain corresponds to one TCI state among a plurality of activated TCI states.

In some embodiments, the sending module 1101 is further configured to send a plurality of first MAC-CEs, where each first MAC-CE is used to activate a plurality of TCI states corresponding to one TCI domain.

In some embodiments, the indication information indicates a plurality of TCI states, and each TCI state is corresponding to one TRP.

In some embodiments, the indication information includes a plurality of second MAC-CEs, wherein each second MAC-CE is used for activating one TCI state.

In some embodiments, the sending module 1101 is further configured to send the first configuration signaling to the terminal, where the first configuration signaling is used for configuring a TCI state list which includes a plurality of TCI states, and each TCI state is in a one-to-one correspondence with the open loop power parameter.

In some embodiments, the indication information indicates one TCI domain, the TCI domain indicates a TCI state group, and the TCI state group includes a plurality of TCI states.

In some embodiments, each TCI state in the plurality of TCI states is associated with the open loop power parameter of one TRP, and the TCI state group indicated by the TCI domain corresponds to a TCI state group in the plurality of activated TCI state groups.

In some embodiments, the sending module 1101 is further configured to send a third MAC-CE, where the third MAC-CE is configured to activate a plurality of TCI state groups corresponding to the TCI domain.

In some embodiments, the indication information indicates one TCI state group, and the TCI state group includes a plurality of TCI states.

In some embodiments, the indication information is a fourth MAC-CE, and the fourth MAC-CE is used to activate one TCI state group.

In some embodiments, the sending module 1101 is further configured to send a second configuration signaling, where the second configuration signaling is used for configuring a TCI state list which includes a plurality of TCI state groups, and each TCI state included in each TCI state group is in a one-to-one correspondence with the open loop power parameter.

In some embodiments, the open loop power parameter includes at least one of:

an open loop receiving end power target value;
a partial path loss compensation factor;
a closed loop index; and
a path loss reference signal.

In some embodiments, the indication information indicates a plurality of parameter sets, and each parameter set is used for indicating an open loop power parameter corresponding to one TRP.

In some embodiments, the indication information is carried in a radio resource control (RRC) or MAC-CE.

In some embodiments, the open loop power parameter includes at least one of:

an open loop receiving end power target value;
a partial path loss compensation factor; and
a closed loop index.

In some embodiments, the indication information includes a plurality of transmit power control (TPC) domains, each TPC domain indicating the closed loop power parameter corresponding to one TRP.

In some embodiments, the indication information indicates a closed loop power parameter set, where the closed loop power parameter set includes a plurality of closed loop power parameters.

In some embodiments, the sending module 1101 is further configured to send to the terminal a correspondence between the indication information and a closed loop power parameter set, where the closed loop power parameter set includes a plurality of closed loop power parameters.

It should be noted that the apparatus provided in the above-mentioned embodiments is merely exemplified by the division of the above-mentioned functional modules when realizing the functions thereof, and in practice, the above-mentioned function allocation can be performed by different functional modules according to needs, i.e., the internal structure of a device is divided into different functional modules to perform all or part of the functions described above. In addition, the apparatus and method embodiments provided in the above embodiments belong to the same concept, and the specific implementation process is detailed in the method embodiments, which will not be repeated here.

FIG. 12 shows a schematic block diagram of a communication device according to an exemplary embodiment of the present disclosure, and the communication device includes: a processor 1201, a receiver 1202, a transmitter 1203, a memory 1204, and a bus 1205.

The processor 1201 includes one or more processing cores and executes software programs and modules to perform various functional disclosures and information processing.

The receiver 1202 and the transmitter 1203 may be implemented as a communication assembly, which may be a communication chip.

The memory 1204 is coupled to the processor 1201 through the bus 1205.

The memory 1204 may be used to store at least one program code for execution by the processor 1201 to perform the steps in the above-described method embodiments.

Further, the communication device may be a terminal or a network device. The memory 1004 may be implemented by any type or combination of volatile or non-volatile memory devices including, but not limited to: magnetic or optical disk, electrically erasable programmable read-only memory (EEPROM), erasable programmable read-only memory (EPROM), static random access memory (SRAM), read-only memory (ROM), magnetic memory, flash memory, and programmable read-only memory (PROM).

In an exemplary embodiment, a computer-readable storage medium is also provided, where the computer-readable storage medium has stored therein executable program codes that are loaded and executed by the processor to implement the power control method performed by a communication device provided by the various method embodiments described above.

In an exemplary embodiment, a chip is provided, where the chip includes programmable logic circuitry and/or program instructions for implementing the power control method as provided by various method embodiments when the chip is run on a terminal or network device.

In an exemplary embodiment, a computer program product is provided which, when being executed by a processor of a terminal or network device, is adapted to carry out the power control methods provided by the various method embodiments described above.

A person skilled in the art will appreciate that all or a portion of the steps for implementing the embodiments described above may be performed by hardware or by a program that instructs the associated hardware, and the program may be stored on a computer-readable storage medium, such as a read-only memory, magnetic or optical disk.

The above description is intended to be illustrative of the present disclosure and should not be taken as limiting the scope of the disclosure, which is defined by the appended claims and their equivalents.

## Claims

1. A power control method, performed by a terminal, comprising:
receiving indication information sent by a network device, wherein the indication information indicates a power control parameter for an uplink transmission corresponding to each TRP among a plurality of transmission and reception points (TRPs).

2. The method according to claim 1, wherein the power control parameter for uplink transmission corresponding to each TRP comprises an open loop power parameter and a closed loop power parameter;
wherein the open loop power parameter is used for compensating signal loss caused by path loss and shadow fading, and the closed loop power parameter refers to a power adjustment value indicated by the network device for a second uplink transmission indication of the terminal according to an uplink power measured on a first uplink transmission.

3. The method according to claim 2, wherein the open loop power parameter and a transmission configuration indication (TCI) state are in a one-to-one correspondence.

4. The method according to claim 3, wherein the indication information indicates a plurality of TCI domains, each TCI domain indicating one TCI state.

5. The method according to claim 4, wherein each TCI state is associated with the open loop power parameter of one TRP, and the TCI state indicated by the TCI domain corresponds to one TCI state among a plurality of activated TCI states;

6. The method according to claim 5, further comprising:
receiving a plurality of first medium access control control elements (MAC-CEs), wherein each of the first MAC-CEs is used for activating a plurality of TCI states corresponding to one TCI domain.

7. The method according to claim 3, wherein the indication information indicates a plurality of TCI states, each TCI state being corresponding to one TRP.

8. The method according to claim 7, wherein the indication information comprises a plurality of second MAC-CEs, and each of the second MAC-CEs is used for activating one TCI state.

9. The method according to any one of claims 3 to 8, further comprising:
receiving a first configuration signaling, wherein the first configuration signaling is used for configuring a TCI state list, wherein the TCI state list comprises a plurality of TCI states, and each TCI state is in a one-to-one correspondence with the open loop power parameter.

10. The method according to claim 3, wherein the indication information indicates one TCI domain, the TCI domain indicates a TCI state group, and the TCI state group comprises a plurality of TCI states.

11. The method according to claim 10, wherein each TCI state among the plurality of TCI states is associated with the open loop power parameter of one TRP, and the TCI state group indicated by the TCI domain is corresponding to one TCI state group among a plurality of activated TCI state groups.

12. The method according to claim 11, further comprising:
receiving a third MAC-CE, wherein the third MAC-CE is used for activating a plurality of TCI state groups corresponding to the TCI domain.

13. The method according to claim 3, wherein the indication information indicates one TCI state group, and the TCI state group comprises a plurality of TCI states.

14. The method according to claim 13, wherein the indication information is a fourth MAC-CE, and the fourth MAC-CE is used for activating one TCI state group.

15. The method according to any one of claims 10 to 14, further comprising:
receiving a second configuration signaling, wherein the second configuration signaling is used for configuring a TCI state list, wherein the TCI state list comprises a plurality of TCI state groups, and each TCI state comprised in each TCI state group is in a one-to-one correspondence with the open loop power parameter.

16. The method according to any one of claims 3 to 15, wherein the open loop power parameter comprises at least one of:

an open loop receiving end power target value;
a partial path loss compensation factor;
a closed loop index; and
a path loss reference signal.

17. The method according to claim 2, wherein the indication information indicates a plurality of parameter sets, wherein each parameter set is used for indicating the open loop power parameter corresponding to one TRP.

18. The method according to claim 2, wherein the indication information is carried in a radio resource control (RRC) or MAC-CE.

19. The method according to claim 17 or 18, wherein the open loop power parameter comprises at least one of:

an open loop receiving end power target value;
a partial path loss compensation factor; and
a closed loop index.

20. The method according to claim 2, wherein the indication information comprises a plurality of transmit power control (TPC) domains, and each TPC domain indicates the closed loop power parameter corresponding to one TRP.

21. The method according to claim 2, wherein the indication information indicates a closed loop power parameter set, and the closed loop power parameter set comprises a plurality of closed loop power parameters.

22. The method according to claim 21, further comprising:
receiving a correspondence between the closed loop power parameter set and indication information sent by the network device, wherein the closed loop power parameter set comprises a plurality of closed loop power parameters.

23. A power control method, performed by a network device, comprising:
sending indication information to a terminal, wherein the indication information indicates a power control parameter for an uplink transmission corresponding to each TRP among a plurality of TRPs.

24. The method according to claim 23, wherein the power control parameter for uplink transmission corresponding to each TRP comprises an open loop power parameter and a closed loop power parameter;
wherein the open loop power parameter is used for compensating signal loss caused by path loss and shadow fading, and the closed loop power parameter refers to a power adjustment value indicated by the network device for a second uplink transmission indication of the terminal according to an uplink power measured on a first uplink transmission.

25. The method according to claim 24, wherein the open loop power parameter and a transmission configuration indication (TCI) state are in a one-to-one correspondence.

26. The method according to claim 25, wherein the indication information indicates a plurality of TCI domains, and each TCI domain indicates one TCI state.

27. The method according to claim 26, wherein each TCI state is associated with the open loop power parameter of one TRP, and the TCI state indicated by the TCI domain is corresponding to one TCI state among a plurality of activated TCI states.

28. The method according to claim 27, further comprising:
sending a plurality of first MAC-CEs, wherein each of the first MAC-CEs is used for activating a plurality of TCI states corresponding to one TCI domain.

29. The method according to claim 25, wherein the indication information indicates a plurality of TCI states, each TCI state being corresponding to one TRP.

30. The method according to claim 29, wherein the indication information comprises a plurality of second MAC-CEs, and each of the second MAC-CEs is used for activating one TCI state.

31. The method according to any one of claims 25 to 30, further comprising:
sending a first configuration signaling, wherein the first configuration signaling is used for configuring a TCI state list, wherein the TCI state list comprises a plurality of TCI states, and each TCI state is in a one-to-one correspondence with the open loop power parameter.

32. The method according to claim 25, wherein the indication information indicates one TCI domain, the TCI domain indicates a TCI state group, and the TCI state group comprises a plurality of TCI states.

33. The method according to claim 32, wherein each TCI state among the plurality of TCI states is associated with the open loop power parameter of one TRP, and the TCI state group indicated by the TCI domain is corresponding to one TCI state group among a plurality of activated TCI state groups.

34. The method according to claim 33, further comprising:
sending a third MAC-CE, wherein the third MAC-CE is used for activating a plurality of TCI state groups corresponding to the TCI domain.

35. The method according to claim 25, wherein the indication information indicates one TCI state group, and the TCI state group comprises a plurality of TCI states.

36. The method according to claim 35, wherein the indication information is a fourth MAC-CE, and the fourth MAC-CE is used for activating one TCI state group.

37. The method according to any one of claims 32 to 36, further comprising:
sending a second configuration signaling, wherein the second configuration signaling is used for configuring a TCI state list, wherein the TCI state list comprises a plurality of TCI state groups, and each TCI state comprised in each TCI state group is in an one-to-one correspondence with the open loop power parameter.

38. The method according to any one of claims 25 to 37, wherein the open loop power parameter comprises at least one of:

an open loop receiving end power target value;
a partial path loss compensation factor;
a closed loop index; and
a path loss reference signal.

39. The method according to claim 24, wherein the indication information indicates a plurality of parameter sets, wherein each parameter set is used for indicating the open loop power parameter corresponding to one TRP.

40. The method according to claim 32, wherein the indication information is carried in a radio resource control (RRC) or MAC-CE.

41. The method according to claim 39 or 40, wherein the open loop power parameter comprises at least one of:

an open loop receiving end power target value;
a partial path loss compensation factor; and
a closed loop index.

42. The method according to claim 24, wherein the indication information comprises a plurality of transmit power control TPC domains, and each TPC domain indicates the closed loop power parameter corresponding to one TRP.

43. The method according to claim 24, wherein the indication information indicates a closed loop power parameter set, and the closed loop power parameter set comprises a plurality of closed loop power parameters.

44. The method according to claim 43, further comprising:
sending a correspondence between indication information and the closed loop power parameter set to a terminal, wherein the closed loop power parameter set comprises a plurality of closed loop power parameters.

45. A power control apparatus, comprising:
a receiving module, configured to receive indication information sent by a network device, wherein the indication information indicates a power control parameter for an uplink transmission corresponding to each TRP among a plurality of transmission and reception points (TRPs).

46. A power control apparatus, comprising:
a sending module, configured to send indication information to a terminal, wherein the indication information indicates a power control parameter for an uplink transmission corresponding to each TRP among a plurality of TRPs.

47. A terminal, comprising:

a processor; and
a transceiver coupled to the processor; wherein
the processor is configured to load and execute executable instructions to implement the power control method according to any one of claims 1 to 22.

48. A network device, comprising:

a processor; and
a transceiver coupled to the processor; wherein
the processor is configured to load and execute executable instructions to implement the power control method according to any one of claims 23 to 44.

49. A computer-readable storage medium, wherein the computer-readable storage medium has stored therein executable program codes to be loaded and executed by a processor to implement the power control method according to any one of claims 1 to 44.

50. A computer program product, wherein when the computer program product is executed by a processor of a terminal or network device, the power control method according to any one of claims 1 to 44 is implemented.

FIG. 1

FIG. 2

| Terminal | | Network device |
| --- | --- | --- |

Step 301, the network device sends indication information to the terminal, wherein the indication information indicates a power control parameter of an uplink transmission corresponding to each TRP among a plurality of TRPs

Step 302, the terminal receives the indication information sent by the network device, wherein the indication information indicates a power control parameter of an uplink transmission corresponding to each TRP among a plurality of TRPs

FIG. 3

|  |  |  |  |  |  |  | T |
| --- | --- | --- | --- | --- | --- | --- | --- |
| $T_7$ | $T_6$ | $T_5$ | $T_4$ | $T_3$ | $T_2$ | $T_1$ | $T_0$ |
| $T_{15}$ | $T_{14}$ | $T_{13}$ | $T_{12}$ | $T_{11}$ | $T_{10}$ | $T_9$ | $T_8$ |

...

| $T_{N-1}$ | $T_{N-2}$ | $T_{N-3}$ | $T_{N-4}$ | $T_{N-5}$ | $T_{N-6}$ | $T_{N-7}$ | $T_{N-8}$ |
| --- | --- | --- | --- | --- | --- | --- | --- |

FIG. 4

| | | T |
|---|---|---|
| TCI state $ID_0$ | | |
| TCI state ID1 | | |

...

| TCI state $ID_M$ |
|---|

FIG. 5

| TCI state 1 | → | element 1 |
|---|---|---|
| TCI state 2 | → | element 2 |

TCI state list          parameter set list

FIG. 6

| TCI state $ID_{0,1}$ |
|---|
| TCI state $ID_{0,2}$ |

TCI state group 1

...

| TCI state $ID_{N,1}$ |
|---|
| TCI state $ID_{N,2}$ |

TCI state group N

FIG. 7

801

receiving, by the terminal, the indication information sent by the network device, wherein the indication information indicates a power control parameter of an uplink transmission corresponding to each TRP among a plurality of TRPs

FIG. 8

901

Sending, by a network device, indication information to a terminal, wherein the indication information indicates a power control parameter of an uplink transmission corresponding to each TRP among a plurality of TRPs

FIG. 9

1001

Receiving module

FIG. 10

1101

sending module

FIG. 11

1201 processor    1203 transmitter

1205 bus

1202 receiver    1204 memory

FIG. 12

## INTERNATIONAL SEARCH REPORT

International application No.

**PCT/CN2022/084611**

### A. CLASSIFICATION OF SUBJECT MATTER

H04W 52/40(2009.01)i; H04W 52/54(2009.01)i; H04W 52/14(2009.01)i; H04W 52/36(2009.01)i; H04W 52/08(2009.01)i; H04W 52/10(2009.01)i; H04B 7/06(2006.01)i

According to International Patent Classification (IPC) or to both national classification and IPC

### B. FIELDS SEARCHED

Minimum documentation searched (classification system followed by classification symbols)

H04W52/-;H04B7/-

Documentation searched other than minimum documentation to the extent that such documents are included in the fields searched

Electronic data base consulted during the international search (name of data base and, where practicable, search terms used)

CNTXT; CNABS; CNKI; 百度, BAIDU: 传输接收点, 发送接收点, 发射接收点, 上行, 传输功率控制, 传输指示配置, 下行控制信息, MAC, 控制单元, 控制元素, 发送, 传输, 多个, 组, 激活; VEN; USTXT; EPTXT; WOTXT; IEEE; 3GPP: Transmission Reception Point, Transmission and Reception Point, Transmission-Reception Point, TRP, uplink, transmit power control, TPC, Transmission Configuration Indication, TCI, Downlink Control Information, DCI, MAC, Control Element, CE, transmit+, multi, group?, set?, activat+

### C. DOCUMENTS CONSIDERED TO BE RELEVANT

| Category* | Citation of document, with indication, where appropriate, of the relevant passages | Relevant to claim No. |
|---|---|---|
| X | WO 2021260658 A1 (TELEFONAKTIEBOLAGET LM ERICSSON (PUBL)) 30 December 2021 (2021-12-30) description, paragraphs [0130]-[0284] | 1-50 |
| X | CN 108632971 A (HUAWEI TECHNOLOGIES CO., LTD.) 09 October 2018 (2018-10-09) description, paragraphs [0186]-[0324] | 1-50 |
| A | CN 104509180 A (HUAWEI DEVICE CO., LTD.) 08 April 2015 (2015-04-08) entire document | 1-50 |
| A | CN 110475327 A (RESEARCH INSTITUTE OF CHINA MOBILE COMMUNICATIONS CORP. et al.) 19 November 2019 (2019-11-19) entire document | 1-50 |
| A | US 2019335495 A1 (LG ELECTRONICS INC.) 31 October 2019 (2019-10-31) entire document | 1-50 |
| A | WO 2021203404 A1 (QUALCOMM INC.) 14 October 2021 (2021-10-14) entire document | 1-50 |

☑ Further documents are listed in the continuation of Box C. ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **26 November 2022** | **30 December 2022** |

| Name and mailing address of the ISA/CN | Authorized officer |
|---|---|
| China National Intellectual Property Administration (ISA/CN)<br>No. 6, Xitucheng Road, Jimenqiao, Haidian District, Beijing 100088, China | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/084611** |

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2021254638 A1 (NOKIA TECHNOLOGIES OY) 23 December 2021 (2021-12-23) entire document | 1-50 |

Form PCT/ISA/210 (second sheet) (January 2015)

**INTERNATIONAL SEARCH REPORT**
Information on patent family members

International application No.

**PCT/CN2022/084611**

| Patent document cited in search report | | | Publication date (day/month/year) | Patent family member(s) | | | Publication date (day/month/year) |
|---|---|---|---|---|---|---|---|
| WO | 2021260658 | A1 | 30 December 2021 | None | | | |
| CN | 108632971 | A | 09 October 2018 | EP | 3585111 | A1 | 25 December 2019 |
| | | | | US | 2020022087 | A1 | 16 January 2020 |
| | | | | WO | 2018171418 | A1 | 27 September 2018 |
| | | | | IN | 201937038352 | A | 08 November 2019 |
| | | | | EP | 3585111 | A4 | 11 March 2020 |
| | | | | US | 11134447 | B2 | 28 September 2021 |
| | | | | US | 2021400592 | A1 | 23 December 2021 |
| CN | 104509180 | A | 08 April 2015 | WO | 2015168841 | A1 | 12 November 2015 |
| | | | | EP | 3002976 | A1 | 06 April 2016 |
| | | | | US | 2017048807 | A1 | 16 February 2017 |
| | | | | JP | 2016529814 | A | 23 September 2016 |
| | | | | KR | 20160022914 | A | 02 March 2016 |
| | | | | KR | 101821691 | B1 | 24 January 2018 |
| | | | | US | 9907032 | B2 | 27 February 2018 |
| CN | 110475327 | A | 19 November 2019 | WO | 2019214443 | A1 | 14 November 2019 |
| US | 2019335495 | A1 | 31 October 2019 | WO | 2017222355 | A1 | 28 December 2017 |
| | | | | US | 10813125 | B2 | 20 October 2020 |
| WO | 2021203404 | A1 | 14 October 2021 | None | | | |
| WO | 2021254638 | A1 | 23 December 2021 | None | | | |

Form PCT/ISA/210 (patent family annex) (January 2015)